(19) Europäisches Patentamt
European Patent Office
Office européen des brevets

(11) **EP 4 723 703 A1**

(12) **EUROPEAN PATENT APPLICATION**
published in accordance with Art. 153(4) EPC

(43) Date of publication:
**08.04.2026 Bulletin 2026/15**

(21) Application number: **23944587.7**

(22) Date of filing: **07.07.2023**

(51) International Patent Classification (IPC):
**H04W 12/03** (2021.01)     **H04L 9/00** (2022.01)

(52) Cooperative Patent Classification (CPC):
**H04L 9/00; H04W 12/03**

(86) International application number:
**PCT/CN2023/106437**

(87) International publication number:
**WO 2025/010564 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **YANG, Lu**
**Shenzhen, Guangdong 518129 (CN)**
• **WANG, Wenhui**
**Shenzhen, Guangdong 518129 (CN)**
• **SUN, Li**
**Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS**

(57) This application relates to the field of communication technologies, and provides a communication method and an apparatus, to improve security of information transmission at a physical layer. In the method, a transmit end may encrypt a physical-layer signal, for example, rotate, using a first key, a phase of a second constellation point that is in a second constellation diagram and that carries data, to obtain a first constellation point in a first constellation diagram. Correspondingly, a receive end may decrypt a received physical-layer signal, for example, decrypt a third constellation point in a received third constellation diagram using a second key, to obtain a fourth constellation point that is in a fourth constellation diagram and that carries the foregoing data. In this case, eavesdroppers cannot directly decrypt the intercepted physical-layer signal, and therefore unable to obtain the corresponding data. This can avoid data leakage and improve physical layer transmission security.

```
First                                Second
communication                        communication
apparatus                            apparatus

S501: Obtain a first
constellation diagram

S502: The first communication apparatus sends a first signal based on the first
constellation diagram; and correspondingly, the second communication
apparatus receives a second signal corresponding to the first signal

                                     S503: Determine a third
                                     constellation diagram based
                                     on the second signal

                                     S504: Determine a fourth
                                     constellation diagram based
                                     on the third constellation
                                     diagram

                                     S505: Demodulate the
                                     second signal based on the
                                     fourth constellation diagram
```

FIG. 5

EP 4 723 703 A1

**Description**

**TECHNICAL FIELD**

This application relates to the communication field, and in particular, to a communication method and an apparatus.

**BACKGROUND**

Currently, an air interface security mechanism of cellular networks is deployed at a high layer, to ensure security of information transmission over wireless channels. Specifically, after a security context is activated, both encryption and integrity protection policies are deployed at a packet data convergence protocol (packet data convergence protocol, PDCP) layer or a higher layer.

However, before the security context is activated, the network may be attacked as there is no security assurance mechanism established. In addition, new applications such as positioning and sensing raise new requirement on security of a physical layer, but it is difficult for high-layer security technologies to meet these requirements. For example, due to openness of wireless channels, signal transmission for ranging and positioning is vulnerable to attacks, which may cause serious consequences in some applications. However, it is difficult for the high-layer security technologies to resolve this problem. Therefore, how to improve security of information transmission at the physical layer is a current hot topic.

**SUMMARY**

Embodiments of this application provide a communication method and an apparatus, to improve security of information transmission at a physical layer.

To achieve the foregoing objective, this application uses the following technical solutions.

According to a first aspect, a communication method is provided. The method includes: A first communication apparatus obtains a first constellation diagram; and sends a first signal based on the first constellation diagram, where the first constellation diagram includes first constellation points, the first constellation point is obtained by encrypting a second constellation point in a second constellation diagram based on a first key, the second constellation point is obtained by mapping to-be-sent data, and a phase of the first constellation point is different from a phase of the second constellation point. A second communication apparatus receives a second signal corresponding to the first signal; determines a third constellation diagram based on the second signal; determines a fourth constellation diagram based on the third constellation diagram; and demodulates the second signal based on the fourth constellation diagram, where a fourth constellation point is obtained by decrypting a third constellation point in the third constellation diagram based on a second key, and a phase of the third constellation point is different from a phase of the fourth constellation point.

It can be learned from the method according to the first aspect that the first communication apparatus (a transmit end) may encrypt a physical-layer signal, for example, rotate (that is, encrypt), based on the first key, the phase of the second constellation point that carries data, to obtain the first constellation point. Correspondingly, the second communication apparatus (a receive end) may decrypt a received physical-layer signal, for example, decrypt (or restore) the received third constellation point based on the second key, to obtain the fourth constellation point that carries the foregoing data. The first key and the second key are a pair of keys. For example, a phase of a constellation point may be rotated based on the first key, and a phase of the constellation point may be rotated reversely based on the second key, so that the phase of the constellation point is restored to the original phase, that is, the first key and the second key may represent opposite phase rotation amounts. If the first key and the second key each are represented by a diagonal unitary matrix, each diagonal element in a diagonal unitary matrix corresponding to the first key and each diagonal element in a diagonal unitary matrix corresponding to the second key are in a reciprocal relationship. In this case, because an eavesdropper does not have the accurate first key or second key, the eavesdropper cannot directly decrypt the stolen physical-layer signal, and cannot obtain the corresponding data. In this way, data leakage can be avoided, and security of transmission at a physical layer can be improved.

In a possible implementation, the first key represents a phase rotation amount between the first constellation point and the second constellation point, and this means that, the phase rotation amount is indicated by the first key, so that different phase rotation amounts can be flexibly implemented by configuring the first key.

In a possible implementation, the phase rotation amount between the first constellation point and the second constellation point is determined based on information about a legitimate channel, and the legitimate channel is used to carry the first signal. It may be understood that the legitimate channel is a channel between the transmit end and a legitimate receive end. For the transmit end and the legitimate receive end, the information about the legitimate channel may be information obtained through channel estimation based on a pilot. Because an eavesdropping channel used by the eavesdropper is different from the legitimate channel, and the eavesdropper cannot obtain the completely accurate information about the legitimate channel, the eavesdropper cannot obtain the phase rotation amount. In other words, the eavesdropper cannot restore a received constellation point to a constellation point corresponding to the second constellation point, that is, only the legitimate receive end can restore the third constellation point to the fourth constellation point. In this way, security of information transmission can be further improved.

In a possible implementation, the information about the legitimate channel includes channel gains in a channel gain matrix of the legitimate channel. It may be understood that a correspondence between the second constellation point and a location of the channel gain in the channel gain matrix may be preset. For example, each constellation point in second constellation points corresponds to each channel gain in a 1st row in the channel gain matrix successively, so that a phase rotation amount corresponding to each constellation point in the second constellation points can be accurately determined based on the channel gain corresponding to the second constellation point.

In a possible implementation, a phase rotation amount of any constellation point in the second constellation points is determined based on an initial phase rotation amount, a unit phase rotation amount, and a quantity of unit phase rotation amounts, and the quantity of unit phase rotation amounts is determined based on the channel gain. The initial phase rotation amount and/or the unit phase rotation amount may be preset or protocol-predefined. In this way, the phase rotation amount may be determined based on the channel gain, so that the phase rotation amount of the any constellation point in the second constellation points can be flexibly set.

In a possible implementation, an expression of the phase rotation amount of the any constellation point in the second constellation points is: $e^{j(\theta_0 + \Delta\theta \times \eta)}$, where $\theta_0$ is the initial phase rotation amount, $\Delta\theta$ is the unit phase rotation amount, and $\eta$ is the quantity of unit phase rotation amounts.

In a possible implementation, the unit phase rotation amount is a value obtained by dividing $2\pi$ by m, and m is an integer greater than or equal to 2. It may be understood that m may represent a quantity of locations to which a constellation point may be rotated. For example, if m is equal to 2, it represents that the constellation point may be rotated to two locations.

In a possible implementation, m is an integer greater than or equal to 2 and less than or equal to a first threshold. m is set to a value greater than or equal to 2 and less than or equal to the first threshold, to enable the quantity of locations to which the constellation point may be rotated to be not excessively large. In this way, encryption complexity of the first communication apparatus can be reduced. Optionally, the first threshold is $2^n$, and n is a modulation order.

In a possible implementation, a value of the quantity of unit phase rotation amounts is greater than or equal to 0 and less than or equal to m-1.

In a possible implementation, the first key is represented by a first diagonal unitary matrix, a modulus of each diagonal element in the first diagonal unitary matrix is 1, and a value of a diagonal element in the first diagonal unitary matrix is the phase rotation amount between the first constellation point and the second constellation point. In this way, when the phase of the second constellation point is rotated, an amplitude of the second constellation point can remain unchanged, that is, energy of a symbol corresponding to the second constellation point can remain unchanged. In other words, in this case, that energy of a sent signal is reduced, causing a signal-to-noise ratio to decrease does not occur, so that communication performance can be ensured.

In a possible implementation, the second key represents a phase rotation amount between the third constellation point and the fourth constellation point, and this means that, the phase rotation amount is indicated by the second key, so that different phase rotation amounts can be flexibly implemented by configuring the second key.

In a possible implementation, the phase rotation amount between the third constellation point and the fourth constellation point is determined based on the legitimate channel, and the legitimate channel is used to carry the second signal. It may be understood that the legitimate channel is the channel between the transmit end and the legitimate receive end. For the transmit end and the legitimate receive end, the information about the legitimate channel may be information obtained through the channel estimation based on the pilot. Because the eavesdropping channel used by the eavesdropper is different from the legitimate channel, and the eavesdropper cannot obtain the completely accurate information about the legitimate channel, the eavesdropper cannot obtain the phase rotation amount. In other words, the eavesdropper cannot restore the received constellation point to the constellation point corresponding to the second constellation point, that is, only the legitimate receive end can restore the third constellation point to the fourth constellation point. In this way, security of signal transmission can be further improved.

In a possible implementation, the information about the legitimate channel includes channel gains in the channel gain matrix of the legitimate channel. It may be understood that a correspondence between the third constellation point and a location of the channel gain in the channel gain matrix may be preset. For example, each constellation point in third constellation points corresponds to each channel gain in a 1st column in the channel gain matrix successively, so that a phase rotation amount corresponding to each constellation point in the third constellation points can be accurately determined based on the channel gain corresponding to the third constellation point. It may be further understood that the correspondence between the third constellation point and the location of the channel gain in the channel gain matrix is the same as the correspondence between the second constellation point and the location of the channel gain in the channel gain matrix, that is, locations of channel gains that are in the channel gain matrix and that correspond to the constellation points in the third constellation points are the same as locations of channel gains that are in the channel gain matrix and that correspond to constellation points that are in the second constellation points and that are corresponding to the third constellation points. In this way, it can be ensured that the third constellation point is restored to the fourth constellation point corresponding to the second constellation point.

In a possible implementation, a phase rotation amount of any constellation point in the third constellation points is determined based on an initial phase rotation amount, a unit phase rotation amount, and a quantity of unit phase rotation amounts, and the quantity of unit phase rotation amounts is determined based on the channel gain. The initial phase rotation amount and/or the unit phase rotation amount may be preset or protocol-predefined. In this way, the phase rotation amount may be determined based on the channel gain, so that the phase rotation amount of the any constellation point in the third constellation points can be flexibly set.

In a possible implementation, an expression of the phase rotation amount of the any constellation point in the third constellation points is: $e^{-j(\theta_0 + \Delta\theta \times \eta)}$, where $\theta_0$ is the initial phase rotation amount, $\Delta\theta$ is the unit phase rotation amount, and $\eta$ is the quantity of unit phase rotation amounts.

In a possible implementation, the unit phase rotation amount is a value obtained by dividing $2\pi$ by m, and m is an integer greater than or equal to 2. It may be understood that m may represent a quantity of locations to which a constellation point may be rotated. For example, if m is equal to 4, it represents that the constellation point may be rotated to four locations.

In a possible implementation, m is an integer greater than or equal to 2 and less than or equal to the first threshold. m is set to a value greater than or equal to 2 and less than or equal to the first threshold, to enable the quantity of locations to which the constellation point may be rotated to be not excessively large. In this way, decryption complexity of the second communication apparatus can be reduced. Optionally, the first threshold is $2^n$, and n is a modulation order.

In a possible implementation, a value of the quantity of unit phase rotation amounts is greater than or equal to 0 and less than or equal to m-1.

In a possible implementation, the second key is represented by a second diagonal unitary matrix, a modulus of each diagonal element in the second diagonal unitary matrix is 1, and a value of a diagonal element in the second diagonal unitary matrix is the phase rotation amount between the third constellation point and the fourth constellation point. In this way, when the phase of the third constellation point is rotated, an amplitude of the third constellation point can remain unchanged, that is, energy of a symbol corresponding to the third constellation point can remain unchanged. In this way, it can be ensured that the third constellation point is restored to the fourth constellation point corresponding to the second constellation point.

According to a second aspect, a communication method is provided. The method includes: obtaining a first constellation diagram; and sending a signal based on the first constellation diagram. The first constellation diagram includes first constellation points, the first constellation point is obtained by encrypting a second constellation point in a second constellation diagram based on a first key, the second constellation point is obtained by mapping to-be-sent data, and a phase of the first constellation point is different from a phase of the second constellation point.

In a possible implementation, the first key represents a phase rotation amount between the first constellation point and the second constellation point.

In a possible implementation, the phase rotation amount between the first constellation point and the second constellation point is determined based on information about a legitimate channel, and the legitimate channel is used to carry the signal sent based on the first constellation diagram.

In a possible implementation, the information about the legitimate channel includes channel gains in a channel gain matrix of the legitimate channel.

In a possible implementation, a phase rotation amount of any constellation point in second constellation points is determined based on an initial phase rotation amount, a unit phase rotation amount, and a quantity of unit phase rotation amounts, and the quantity of unit phase rotation amounts is determined based on the channel gain.

In a possible implementation, an expression of the phase rotation amount of the any constellation point in the second constellation points is: $e^{j(\theta_0 + \Delta\theta \times \eta)}$, where $\theta_0$ is the initial phase rotation amount, $\Delta\theta$ is the unit phase rotation amount, and $\eta$ is the quantity of unit phase rotation amounts.

In a possible implementation, the unit phase rotation amount is a value obtained by dividing $2\pi$ by m, and m is an integer greater than or equal to 2.

In a possible implementation, m is an integer greater than or equal to 2 and less than or equal to a first threshold. Optionally, the first threshold is $2^n$, and n is a modulation order.

In a possible implementation, a value of the quantity of unit phase rotation amounts is greater than or equal to 0 and less than or equal to m-1.

In a possible implementation, the first key is represented by a first diagonal unitary matrix, a modulus of each diagonal element in the first diagonal unitary matrix is 1, and a value of a diagonal element in the first diagonal unitary matrix is the phase rotation amount between the first constellation point and the second constellation point.

In addition, for technical effects of the communication method according to the second aspect, refer to the technical effects of the communication method according to the first aspect. Details are not described herein again.

According to a third aspect, a communication method is provided. The method includes: determining a third constellation diagram based on a received signal; determining a fourth constellation diagram based on the third constellation diagram; and demodulating the received signal based on the fourth constellation diagram. The fourth constellation diagram includes fourth constellation points, the fourth constellation point is obtained by decrypting a third constellation point in the third constellation diagram based on a second key, and a phase of the third constellation point is different from a phase of the fourth constellation point.

In a possible implementation, the second key represents a phase rotation amount between the third constellation point and the fourth constellation point.

In a possible implementation, the phase rotation amount between the third constellation point and the fourth constellation point is determined based on a legitimate channel, and the legitimate channel is used to carry the received signal.

In a possible implementation, information about the legitimate channel includes channel gains in a channel gain matrix of the legitimate channel.

In a possible implementation, a phase rotation amount of any constellation point in third constellation points is determined based on an initial phase rotation amount, a unit phase rotation amount, and a quantity of unit phase rotation amounts, and the quantity of unit phase rotation amounts is determined based on the channel gain.

In a possible implementation, an expression of the phase rotation amount of the any constellation point in the third constellation points is: $e^{j(\theta_0 + \Delta\theta \times \eta)}$, where $\theta_0$ is the initial phase rotation amount, $\Delta\theta$ is the unit phase rotation amount, and $\eta$ is the quantity of unit phase rotation amounts.

In a possible implementation, the unit phase rotation amount is a value obtained by dividing $2\pi$ by m, and m is an integer greater than or equal to 2.

In a possible implementation, m is an integer greater than or equal to 2 and less than or equal to a first threshold. Optionally, the first threshold is $2^n$, and n is a modulation order.

In a possible implementation, a value of the quantity of unit phase rotation amounts is greater than or equal to 0 and less than or equal to m-1.

In a possible implementation, the second key is represented by a second diagonal unitary matrix, a modulus of each diagonal element in the second diagonal unitary matrix is 1, and a value of a diagonal element in the second diagonal unitary matrix is the phase rotation amount between the third constellation point and the fourth constellation point.

In addition, for technical effects of the communication method according to the third aspect, refer to the technical effects of the communication method according to the first aspect. Details are not described herein again.

According to a fourth aspect, a communication apparatus is provided. The communication apparatus includes modules configured to perform the method according to the second aspect, for example, a transceiver module and a processing module. For example, the processing module is configured to obtain a first constellation diagram; and the transceiver module is configured to send a signal based on the first constellation diagram. The first constellation diagram includes first constellation points, the first constellation point is obtained by encrypting a second constellation point in a second constellation diagram based on a first key, the second constellation point is obtained by mapping to-be-sent data, and a phase of the first constellation point is different from a phase of the second constellation point.

Optionally, the transceiver module may include a sending module and/or a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus is enabled to perform the method according to the second aspect.

It may be understood that the communication apparatus according to the fourth aspect may be a terminal, for example, a terminal device or a network device, may be a chip (system) or another part or component that may be disposed in the terminal or the network device, or may be an apparatus that includes the terminal or the network device. This is not limited in this application.

In addition, for technical effects of the communication apparatus according to the fourth aspect, refer to the technical effects of the method according to the second aspect. Details are not described herein again.

According to a fifth aspect, a communication apparatus is provided. The communication apparatus includes modules configured to perform the method according to the third aspect, for example, a transceiver module and a processing module. For example, the transceiver module is configured to receive a signal; the processing module is configured to determine a third constellation diagram based on the received signal; and the processing module is further configured to: determine a fourth constellation diagram based on the third constellation diagram; and demodulate the received signal based on the fourth constellation diagram. The fourth constellation diagram includes fourth constellation points, the fourth constellation point is obtained by decrypting a third constellation point in the third constellation diagram based on a second key, and a phase of the third constellation point is different from a phase of the fourth constellation point.

Optionally, the transceiver module may include a sending module and/or a receiving module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module. The storage module stores a program or instructions. When the processing module executes the program or the instructions, the communication apparatus is enabled to perform the method according to the third aspect.

It may be understood that the communication apparatus according to the fifth aspect may be a terminal, for example, a terminal device or a network device, may be a chip (system) or another part or component that may be disposed in the terminal or the network device, or may be an apparatus that includes the terminal or the network device. This is not limited in this application.

In addition, for technical effects of the communication apparatus according to the fifth aspect, refer to the technical effects of the method according to the third aspect. Details are not described herein again.

According to a sixth aspect, a communication apparatus is provided. The communication apparatus includes a processor. The processor is configured to perform the method according to any one of the possible implementations of the second aspect or the third aspect.

In a possible implementation, the processor enables, by using a logic circuit and/or by executing computer instructions, the communication apparatus to perform the method according to any one of the possible implementations of the second aspect or the third aspect.

In a possible design scheme, the communication apparatus according to the sixth aspect may further include a transceiver. The transceiver may be a transceiver circuit or an interface circuit. The transceiver may be used by the communication apparatus according to the sixth aspect to communicate with another communication apparatus.

In a possible design scheme, the communication apparatus according to the sixth aspect may further include a memory, and the memory includes the foregoing computer instructions. The memory and the processor may be integrated together, or may be disposed separately. The memory may be further configured to store signaling and/or data related to the method according to either of the first aspect and the second aspect.

In embodiments of this application, the communication apparatus according to the sixth aspect may be the terminal or the network device according to either of the second aspect and the third aspect, a chip (system) or another part or component that may be disposed in the terminal or the network device, or an apparatus that includes the terminal or the network device. This is not limited in this application.

In addition, for technical effects of the communication apparatus according to the sixth aspect, refer to the technical effects of the method according to any one of the implementations of the second aspect or the third aspect. Details are not described herein again.

According to a seventh aspect, a communication chip is provided. The communication chip stores instructions. When the chip runs on a communication device, the method according to any one of the implementations of the first aspect or the second aspect is implemented.

According to an eighth aspect, a communication system is provided. The communication system includes at least one of the following: a first communication apparatus configured to perform the method according to the second aspect, and/or a second communication apparatus configured to perform the method according to the third aspect.

According to a ninth aspect, a computer-readable storage medium is provided, and includes a computer program or instructions. When the computer program or the instructions are run on a computer, the computer is enabled to perform the method according to any one of the possible implementations of the first aspect, the second aspect, or the third aspect.

According to a tenth aspect, a computer program product is provided, and includes a computer program or instructions. When the computer program or the instructions are run on a computer, the computer is enabled to perform the method according to any one of the possible implementations of the first aspect, the second aspect, or the third aspect.

**BRIEF DESCRIPTION OF DRAWINGS**

FIG. 1 is a diagram of a quadrature amplitude modulation QAM constellation diagram according to an embodiment of this application;
FIG. 2 is a diagram of artificial noise injection according to an embodiment of this application;
FIG. 3 is a first diagram of an architecture of a communication system according to an embodiment of this application;
FIG. 4 is a second diagram of an architecture of a communication system according to an embodiment of this application;
FIG. 5 is a schematic flowchart of a communication method according to an embodiment of this application;

FIG. 6 is a diagram of a binary phase shift keying BPSK constellation diagram according to an embodiment of this application;

FIG. 7 is a first diagram of rotation of a second constellation point according to an embodiment of this application;

FIG. 8 is a second diagram of rotation of a second constellation point according to an embodiment of this application;

FIG. 9 is a diagram of a 4-QAM constellation diagram according to an embodiment of this application;

FIG. 10 is a third diagram of rotation of a second constellation point according to an embodiment of this application;

FIG. 11 is a diagram of a 16-QAM constellation diagram according to an embodiment of this application;

FIG. 12 is a diagram of locations of a first communication apparatus, a second communication apparatus, and an eavesdropper according to an embodiment of this application;

FIG. 13 is a diagram of a simulation result according to an embodiment of this application;

FIG. 14 is a schematic flowchart of processing of signal sending and receiving according to an embodiment of this application;

FIG. 15 is a first diagram of a structure of a communication apparatus according to an embodiment of this application; and

FIG. 16 is a second diagram of a structure of a communication apparatus according to an embodiment of this application.

## DESCRIPTION OF EMBODIMENTS

For ease of understanding, the following first describes technical terms in embodiments of this application.

1. Quadrature modulation

Quadrature modulation means that a transmit end (for example, a network device) modulates data by using two orthogonal (for example, a phase difference is 90°) carriers with a same frequency, to obtain a quadrature modulation signal (or referred to as a modulation symbol). Quadrature modulation may also be referred to as IQ modulation, where I represents an in-phase (in-phase) component, and Q represents a quadrature (quadrature) component. In other words, quadrature modulated data may include an I component and a Q component orthogonal to each other, so that the I component and the Q component can be considered as two dimensions that may be independently detected at a receive end (for example, a terminal device).

For example, the modulation symbol may be represented by a complex value, for example, may be determined according to Formula (1).

$$x = a + i \cdot b = a \cdot cos\omega t + b \cdot sin\omega t \qquad \qquad \text{Formula (1)}$$

In Formula (1), $x$ represents the modulation symbol, $a$ represents an amplitude of the I component, $b$ represents an amplitude of the Q component, $cos\omega t$ represents a carrier used during modulation of the I component, $sin\omega t$ represents a carrier used during modulation of the Q component, and $\omega$ represents a frequency of the carrier.

It may be understood that modulation mean that information is conveyed by using variations of a related parameter (for example, an amplitude, a frequency, or a phase) of the carrier, and to-be-sent data is mapped to the modulation symbol $x$. Based on different related parameters, quadrature modulation may include binary phase shift keying (binary phase shift keying, BPSK), $\pi/2$-BPSK, quadrature phase shift keying (quadrature phase shift keying, QPSK), quadrature amplitude modulation (quadrature amplitude modulation, QAM), or the like. For example, BPSK means that information is conveyed by using variations of a phase of a carrier while the amplitude and the frequency of the carrier remain unchanged. QAM means that information is conveyed by using variations of an amplitude and a phase of a carrier while the frequency of the carrier remains unchanged.

It should be understood that the to-be-sent data may be represented by bits (bits), and each bit may be represented by "0" or "1". Therefore, the to-be-sent data may be represented as a bit sequence (or referred to as a bit stream) including "0" and "1", for example, {010010...}. The modulation symbol $x$ may carry one or more bits in the data. For example, in BPSK, one modulation symbol may carry a data amount of one bit (there are two types of bits in total: "0" and "1"), and there are two types of different modulation symbols in total. In QPSK, two bits may form a group (there are four types in total: "00", "01", "11", and "10"), so that one modulation symbol can carry a data amount of two bits, and there are four types of different modulation symbols in total. In $2^m$-QAM, a modulation order is $m$, and one modulation symbol may carry a data amount of $m$ bits, that is, there are $2^m$ types of different modulation symbols in total.

For example, in 16-QAM, $2^m = 16$, and m = 4, so that one modulation symbol can carry a data amount of 4 bits. In 64-QAM, $2^m = 64$, and $m = 6$, so that one modulation symbol can carry a data amount of 6 bits.

2. Constellation diagram

The constellation diagram may be used to define amplitude information and phase information of a modulation symbol $x$, that is, the modulation symbol may be represented by a constellation point. The constellation diagram includes an I axis (which, for example, may be a horizontal coordinate axis in the constellation diagram) and a Q axis (which, for example, may be a vertical coordinate axis in the constellation diagram), and the constellation point may be represented in a vector form (for example, (I1, Q1)).

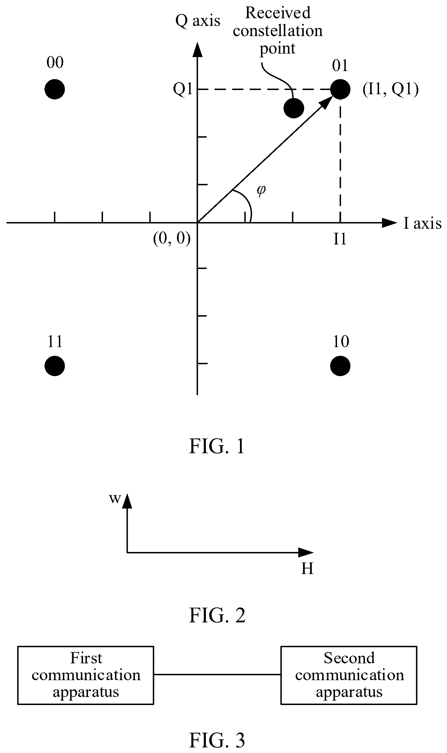

For example, FIG. 1 is a diagram of a QAM constellation diagram according to an embodiment of this application. As shown in FIG. 1, because each modulation symbol may carry a data amount of two bits, that is, $2^m = 4$, and $m = 2$, the constellation diagram shown in FIG. 1 may include four constellation points, and each constellation point may carry a data amount of two bits. A constellation point in an upper right corner in FIG. 1 is used as an example. I1 is a coordinate of the constellation point on an I axis (in other words, a value of the constellation point projected on the I axis), and represents amplitude information of an I component in a modulation symbol. Q1 is a coordinate of the constellation point on a Q axis (in other words, a value of the constellation point projected on the Q axis), and represents amplitude information of a Q component in the modulation symbol. An included angle $\varphi$ between a vector (I1, Q1) and the I axis may represent phase information of a carrier corresponding to the modulation symbol. In other words, the constellation point (I1, Q1) may represent a modulation symbol $x = \frac{I1}{E} + i \cdot \frac{Q1}{E}$, 1/E is a normalization factor corresponding to the modulation symbol, and E is a sum of energy corresponding to four modulation symbols in the constellation diagram.

Further, a distance from a constellation point to the origin (0, 0) may represent energy of a modulation symbol corresponding to the constellation point. It may be understood that a larger distance indicates greater energy of the modulation symbol corresponding to the constellation point.

Refer to FIG. 1. Each constellation point may correspond to one constellation symbol, and the constellation symbol may represent to-be-sent data. The constellation symbol may be an L-bit symbol including information that may represent a bit "0" or a bit "1". If a symbol "0" represents the bit "0", and a symbol "1" represents the bit "1", L may be equal to a modulation order $m$, and both $m$ and L are positive integers. For example, the constellation symbol may be an L-bit symbol including "0" or "1". "0" may represent the bit "0", "1" represents the bit "1", and L=$m$. An example in which $b_i \in \{0,1\}$ and $i \in \{0,1, \ldots, m\}$ is used. In a constellation symbol "$b_1 b_2 \ldots b_i \ldots b_m$", in a sequence from left to right (or referred to as a sequence from a high-order bit to a low-order bit), a 1st symbol $b_1$ in the constellation symbol may represent a bit $b_1$, a 2nd symbol $b_2$ represents a 2nd bit $b_2$, the rest can be deduced by analogy, and an ith symbol $b_i$ represents an ith bit $b_i$. In this way, the constellation symbol "$b_1 b_2 \ldots b_i \ldots b_m$" may represent data "$b_1 b_2 \ldots b_i \ldots b_m$".

Alternatively, another one or more symbols may represent the bit "0", and another one or more symbols may represent the bit "1". This is not specifically limited in embodiments of this application.

It may be understood that, because the constellation symbol may represent the to-be-sent data, a mapping relationship between the to-be-sent data and the modulation symbol may be obtained based on a mapping relationship between the constellation point and the constellation symbol in the constellation diagram. The constellation point (I1, Q1) in the upper right corner in FIG. 1 may be in one-to-one correspondence with data bits "01", so that the data bits "01" can be mapped, based on the constellation diagram shown in FIG. 1, to the constellation point corresponding to the symbol

$$x = \frac{I1}{E} + i \cdot \frac{Q1}{E} \, .$$

Further, a distance between two adjacent constellation points may be referred to as a Euclidean distance (euclidean distance). A larger distance indicates better anti-noise performance, in other words, a receive end is more likely to demodulate a modulation symbol correctly, and a bit error rate (bit error rate, BER) of a signal whose transmission is performed is lower.

It may be understood that, because noise, a non-ideal factor of a transmit-end device, or a non-ideal factor of a receive-end device exists in a transmission process, when the receive end demodulates a modulation symbol from a transmit end, and converts the received modulation symbol into a corresponding received constellation point in the constellation diagram, the received modulation symbol may not accurately match a constellation point corresponding to the modulation symbol in the constellation diagram, but falls near the constellation point corresponding to the modulation symbol. Therefore, the receive end can determine, based on a distance between the received constellation point and another constellation point in the constellation diagram, the constellation point corresponding to the received modulation symbol. For example, assuming that the received constellation point corresponding to the modulation symbol received by the receive end falls in an upper right part (that is, a first quadrant) in FIG. 1, and a distance between the received constellation point and a constellation point corresponding to a constellation symbol "01" is the shortest, the receive end may determine, based on the constellation diagram shown in FIG. 1, that received data is "01".

In other words, at the transmit end, the constellation diagram may be used for mapping between the data (that is, the constellation symbol) and the modulation symbol (that is, the constellation point) during modulation; and at the receive end, the constellation diagram may be used for determining the constellation point during demodulation, to correctly obtain the constellation symbol corresponding to the modulation symbol. In this way, the data sent by the transmit end based on the constellation symbol is obtained.

It should be understood that a Gray mapping rule, a natural mapping rule, or the like may be selected as a mapping rule between the constellation point and the constellation symbol. This is not specifically limited in embodiments of this application. For the Gray mapping rule or the natural mapping rule, refer to a conventional technology. Details are not described herein again.

It should be further understood that, when the transmit end communicates with the receive end, a constellation diagram used by the transmit end may be the same as a constellation diagram used by the receive end, and the constellation diagram may be agreed on in a protocol.

3. Artificial noise injection

The artificial noise injection means that a transmit end injects artificial noise into null space of a legitimate channel. As shown in FIG. 2, a direction of noise w is perpendicular to a direction of a legitimate channel H. Therefore, injected artificial noise does not cause interference to a legitimate receive end. However, because an eavesdropping channel used by the eavesdropper does not perfectly overlap the legitimate channel, that is, there is a difference between the eavesdropping channel and the legitimate channel, the artificial noise has a component in a direction of the eavesdropping channel. In this case, a signal-to-noise ratio of a receiver of the eavesdropper is reduced, and a bit error rate of the eavesdropper is increased.

However, when the eavesdropper uses a high-performance receiver, or a difference between directions of the eavesdropping channel and the legitimate channel is small, the artificial noise injection manner cannot achieve ideal security performance.

4. High-layer security technology

Currently, an air interface security mechanism of a cellular network is deployed at a high layer, to ensure security of information transmission over wireless channels. Specifically, after a security context is activated, both encryption and integrity protection policies are deployed at a PDCP layer or a higher layer.

However, before the security context is activated, the network may be attacked as there is no security assurance mechanism established. In addition, new applications such as positioning and sensing raise new requirements on signal security, but it is difficult for the high-layer security technology to meet these requirements. For example, due to openness of the wireless channels, signal transmission for ranging and positioning is vulnerable to attacks, which may cause serious consequences in some applications. However, it is difficult for the high-layer security technology to resolve this problem. Therefore, how to improve security of information transmission at a physical layer is a current hot topic.

For the foregoing technical problem, embodiments of this application provide the following technical solutions, to improve the security of the information transmission at the physical layer.

The following describes technical solutions of this application with reference to accompanying drawings.

The technical solutions in embodiments of this application may be applied to various communication systems, for example, a 4th generation (4th generation, 4G) mobile communication system like a long term evolution (long term evolution, LTE) system, a 5th generation (5th generation, 5G) mobile communication system like a new radio (new radio, NR) system, and a communication system evolved after 5G, like a 6th generation (6th generation, 6G) mobile communication system, or may be applied to a wireless fidelity (wireless fidelity, Wi-Fi) system, a vehicle to everything (vehicle to everything, V2X) communication system, a device-to-device (device-to-device, D2D) communication system, an internet of vehicles communication system, and the like.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may alternatively be used.

In addition, in embodiments of this application, the terms such as "example" or "for example" are for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are matchable when differences of the terms are not emphasized. The terms "of (of)", "corresponding, relevant (corresponding, relevant)", and "corresponding (corresponding)" may sometimes be interchangeably used. It should be noted that meanings expressed by the terms are matchable when differences of the terms are not emphasized. In addition, "/" mentioned in this application may represent an "or" relationship.

In embodiments of this application, sometimes a subscript, for example, $W_1$, may be written incorrectly in a non-subscript form, for example, W1. Expressed meanings are consistent when differences are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding of embodiments of this application, a communication system shown in FIG. 3 is first used as an example to describe in detail a communication system applicable to embodiments of this application. For example, FIG. 3 is a diagram of an architecture of a communication system to which a communication method according to embodiments of this application is applicable.

As shown in FIG. 3, the communication system includes a first communication apparatus and a second communication apparatus. Both the first communication apparatus and the second communication apparatus may be a terminal apparatus or a network device. For example, when the first communication apparatus is a terminal apparatus, the second communication apparatus may be a network device; or when the second communication apparatus is a terminal apparatus, the first communication apparatus may be a network device.

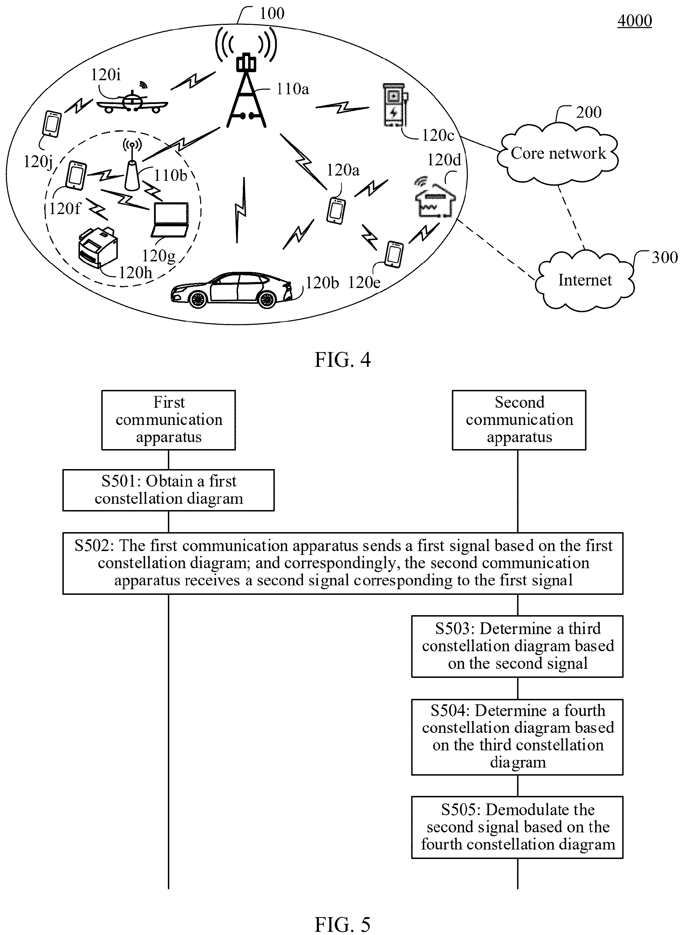

For ease of understanding of embodiments of this application, an application scenario used in this application is described by using an architecture of a communication system shown in FIG. 4 as an example. FIG. 4 is a diagram of a possible and non-limiting system. As shown in FIG. 4, the communication system 4000 includes a radio access network (radio access network, RAN) 100 and a core network (core network, CN) 200. The RAN 100 includes at least one network device (for example, 101a and 101b in FIG. 4, which are collectively referred to as 110) and at least one terminal (for example, 102a to 102j in FIG. 4, which are collectively referred to as 102). The RAN 100 may further include another RAN node, for example, a wireless relay device and/or a wireless backhaul device (not shown in FIG. 4). The terminal 102 is connected to the network device 101 in a wireless manner. The network device 101 is connected to the core network 200 in a wireless or wired manner. A core network device in the core network 200 and the network device 101 in the RAN 100 may be different physical devices, or may be a same physical device that integrates a logical function of the core network and a logical function of the radio access network.

The RAN 100 may be a 3rd generation partnership project (3rd generation partnership project, 3GPP)-related cellular system, for example, a 4G mobile communication system, a 5G mobile communication system, or a system evolved after 5G (for example, a 6G mobile communication system). The RAN 100 may alternatively be an open access network (open RAN, O-RAN or ORAN), a cloud radio access network (cloud radio access network, CRAN), or a Wi-Fi system. The RAN 100 may alternatively be a communication system that integrates two or more of the foregoing systems.

The first communication apparatus and the second communication apparatus provided in embodiments of this application may be used in the network device 101, or may be used in the terminal 102. It may be understood that FIG. 4 shows only a possible architecture of the communication system to which embodiments of this application may be applied. In another possible scenario, the architecture of the communication system may alternatively include another device.

The network device 101 is a node in the radio access network (radio access network, RAN), and may also be referred to as an access network device or a RAN node (or device). The network device 101 is configured to assist the terminal in implementing radio access. A plurality of network devices 101 in the communication system 4000 may be nodes of a same type, or may be nodes of different types. In some scenarios, roles of the network device 101 and the terminal 102 are relative. For example, the network element 102i in FIG. 4 may be a helicopter or an uncrewed aerial vehicle, and may be configured as a mobile base station. For the terminal 102j that accesses the RAN 100 via the network element 102i, the network element 102i is a base station. However, for the base station 101a, the network element 102i is a terminal. The network device 101 and the terminal 102 are sometimes both referred to as communication apparatuses. For example, the network elements 101a and 101b in FIG. 4 may be understood as communication apparatuses having functions of a base station, and the network elements 102a to 102j may be understood as communication apparatuses having functions of a terminal.

In a possible scenario, the network device may be a base station (base station), an evolved NodeB (evolved NodeB, eNodeB), a transmitting and receiving (transmitting and receiving point, TRP), a transmitting point (transmitting point, TP), a next generation NodeB (next generation NodeB, gNB), a next generation base station in a 6th generation (6th generation, 6G) mobile communication system, a base station in a future mobile communication system, a satellite, an access point (access point, AP) in a Wi-Fi system, for example, a home gateway, a router, a server, a switch, and a bridge, an integrated access and backhaul (integrated access and backhaul, IAB) node, or a network device that is in a non-terrestrial network (non-terrestrial network, NTN) communication system of a mobile switching center and that may be deployed on a high-altitude platform or a satellite, or the like. The network device may be a macro base station (for example, 110a in FIG. 4), a micro base station or an indoor base station (for example, 110b in FIG. 4), a relay node or a donor node, or a radio controller in a CRAN scenario. The network device may alternatively be a device having a base station function in device-to-device (device-to-device, D2D) communication, internet of vehicles communication, uncrewed aerial vehicle communication, or machine communication. Optionally, the network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of network devices collaborate to assist the terminal in implementing radio access, and different network devices respectively implement some functions of a base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in the core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by a software module, a hardware module, or a combination of a software module and a hardware module.

A form of the network device is not limited in embodiments of this application. An apparatus configured to implement a function of the network device may be a network device, or may be an apparatus that can support the network device in implementing the function, for example, a chip system. The apparatus may be mounted in the network device or used in cooperation with the network device.

The terminal device 102 may also be referred to as user equipment (user equipment, UE), a mobile station (mobile station, MS), a mobile terminal (mobile terminal, MT), a user apparatus, an access terminal, a subscriber unit, a subscriber station, a remote station, a remote terminal, a mobile device, a user terminal, a terminal, a wireless communication device, a user agent, a user apparatus, or the like, or a device configured to provide voice or data connectivity for a user, or may be an internet of things device. For example, the terminal device includes a handheld device, a vehicle-mounted device, or the like that has a wireless connection function. Currently, the terminal device may be a mobile phone (mobile phone), a pad (Pad), a computer with a wireless transceiver function, a notebook computer, a palmtop computer, a mobile internet device (mobile internet device, MID), a wearable device (for example, a smartwatch, a smart band, or a pedometer), a vehicle-mounted device (for example, a car, a bicycle, an electric car, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a terminal function. For example, the terminal device may alternatively be a device that undertakes a terminal function in D2D communication.

A device form of the terminal is not limited in embodiments of this application. An apparatus configured to implement a function of the terminal device may be a terminal device, or may be an apparatus that can support the terminal device in implementing the function, for example, a chip system. The apparatus may be mounted in the terminal device or used in cooperation with the terminal device. In embodiments of this application, the chip system may include a chip, or may include a chip and another discrete device.

It should be noted that the solutions in embodiments of this application may alternatively be applied to another communication system, and a corresponding name may alternatively be replaced with a name of a corresponding function in the another communication system.

In the communication system, the first communication apparatus may encrypt a physical-layer signal, for example, rotate, based on a first key, a phase of a second constellation point that carries data, to obtain a first constellation point. Correspondingly, the second communication apparatus may decrypt a received physical-layer signal, for example, perform decryption based on a second key, to obtain a fourth constellation diagram that carries the foregoing data, and then obtain the data. However, an eavesdropper cannot obtain the accurate key to directly decrypt the stolen physical-layer signal, and cannot obtain the corresponding data. In this way, data leakage can be avoided and security of transmission at a physical layer can be improved.

For ease of understanding, the following specifically describes the communication method provided in embodiments of this application with reference to FIG. 5.

For example, FIG. 5 is a schematic flowchart of a communication method according to an embodiment of this application. The method is applicable to communication between the first communication apparatus and the second communication apparatus in the foregoing communication system.

As shown in FIG. 5, a procedure of the foregoing communication method is as follows.

S501: The first communication apparatus obtains a first constellation diagram.

The first constellation diagram includes first constellation points, the first constellation point is obtained by encrypting a second constellation point in a second constellation diagram based on a first key, and a phase of the first constellation point is different from a phase of the second constellation point. In other words, the first constellation diagram may be obtained by rotating phases of second constellation points in the second constellation diagram based on the first key. For ease of understanding, the following first describes the second constellation diagram, and then describes the first constellation diagram.

Each constellation point in the second constellation diagram is obtained by mapping to-be-sent data. In other words, each constellation point in the second constellation diagram carries data, and the data is data in the to-be-sent data. That is, data carried by all the constellation points in the second constellation diagram is the to-be-sent data. The to-be-sent data may be a bit sequence. For example, the bit sequence may be mapped to a plurality of modulation symbols, and then the plurality of modulation symbols are represented by constellation points, so that the second constellation diagram can be obtained. For a relationship between the bit sequence and the constellation points, refer to related descriptions in "2. Constellation diagram". Details are not described herein again. It may be understood that, in a mapping process, because the data in the to-be-sent data has a sequence, the modulation symbols obtained through the mapping also have a sequence, that is, the constellation points corresponding to the modulation symbols also have a sequence. For example, the modulation symbols mapped based on the to-be-sent data include a modulation symbol #1 to a modulation symbol #n1, n1 is an integer greater than 1, and a sequence of the modulation symbols is the modulation symbol #1, the modulation symbol #2, ..., and the modulation symbol #n1. In this case, the constellation points in the second constellation diagram include a constellation point #1 to a constellation point #n1, a constellation point #q corresponds to an adjustment symbol #q, q is any integer from 1 to n1, and a sequence of the constellation point #1 to the constellation point #n1 is the constellation point #1, the constellation point #2, ..., and the constellation point #n1.

In this application, the to-be-sent data may be signaling and/or data. This is not limited in this application.

The second constellation diagram includes the second constellation point, that is, the second constellation point is also obtained by mapping the to-be-sent data. The second constellation points may be all the constellation points in the second constellation diagram, or may be a part of the constellation points. In addition, the second constellation points may be preset or protocol-predefined. For example, the second constellation points may be preset as all the constellation points in the second constellation diagram, that is, the second constellation points are the constellation points corresponding to all the modulation symbols. For another example, the second constellation points may be preset as first n constellation points in the second constellation diagram, where the first n constellation points are constellation points corresponding to first n mapped modulation symbols when the first communication apparatus maps the modulation symbols based on the to-be-sent data. In other words, when the second constellation points are a part of the constellation points in the second constellation diagram, the second constellation points may be determined based on a ranking or a location of each constellation point in the second constellation points in all the constellation points. For another example, the second constellation points may be preset as constellation points whose rankings are even numbers or odd numbers in the second constellation diagram. This is not limited in this embodiment of this application.

The first key may represent a phase rotation amount (denoted as a phase rotation amount #L) between the first constellation point and the second constellation point. In other words, the first key may represent a phase rotation amount of each constellation point in the second constellation points during phase rotation. It may be understood that, if a phase rotation amount of any constellation point in the second constellation points during phase rotation is denoted as a phase rotation amount #Li, a value of i is from 1 to N, i is a positive integer, and N is a quantity of all the constellation points in the second constellation points, the phase rotation amount #L includes the phase rotation amount #Li. In this case, i is successively set to 1 to N.

For example, the first key may be represented by a first diagonal unitary matrix, a modulus of each diagonal element in the first diagonal unitary matrix is 1, and a value of each diagonal element in the first diagonal unitary matrix is the phase rotation amount #Li, that is, a value of a diagonal element in the first diagonal unitary matrix is the phase rotation amount #L between the first constellation point and the second constellation point. In other words, the phase rotation amount #L includes the corresponding phase rotation amount of each constellation point in the second constellation points during phase rotation. For example, the second constellation points include a constellation point #a, a constellation point #b, and a constellation point #c. In this case, the phase rotation amount #L includes a phase rotation amount #a of the constellation point #a, a phase rotation amount #b of the constellation point #b, and a phase rotation amount #c of the constellation point #c. A manner of determining the phase rotation amount #L is described below. By setting the first key to the unitary matrix and setting the modulus of each diagonal element in the first diagonal unitary matrix to 1, a phase of a constellation point may be rotated without changing energy of a modulation symbol corresponding to the constellation point, that is, energy of a sent signal is not reduced and no signal-to-noise ratio reduction occurs, ensuring communication performance.

For example, the first diagonal unitary matrix is $U_1 = \begin{bmatrix} e^{j\theta_1} & \cdots & 0 \\ \vdots & \ddots & \vdots \\ 0 & \cdots & e^{j\theta_N} \end{bmatrix}$ , in other words, diagonal elements in the first diagonal unitary matrix are $e^{j\theta_1}$, ..., and $e^{j\theta_N}$, where N is an integer greater than 0. It can be learned that, a value of $e^{j\theta_i}$ is the phase rotation amount #Li, a value of i is from 1 to N, and i is a positive integer. In other words, a value of $e^{j\theta_1}$, ..., and $e^{j\theta_N}$ is the phase rotation amount #L.

It may be understood that a correspondence between the diagonal element in the first diagonal unitary matrix and each constellation point in the second constellation points may be preset or protocol-predefined. For example, a diagonal element in an ith row in the first diagonal unitary matrix is preset or predefined to correspond to an ith constellation point in the second constellation points, where i is successively set to 1 to N, i is a positive integer, and N is the quantity of all the constellation points in the second constellation points. In this way, each diagonal element may correspond to each constellation point in the second constellation points. It may be further understood that the foregoing correspondence between each diagonal element and each constellation point in the second constellation points is merely an example of this embodiment of this application. Alternatively, there may be another correspondence between each diagonal element in the first diagonal unitary matrix and each constellation point in the second constellation points. This is not limited in this embodiment of this application.

The first constellation point may be obtained through phase rotation on the second constellation point based on the first key. In other words, each diagonal element in the first diagonal unitary matrix acts on each constellation point in the second constellation points, for example, each diagonal element in the first diagonal unitary matrix is multiplied by a constellation point corresponding to the corresponding element, so that a phase of each constellation point in the second constellation points is rotated, to obtain the first constellation point.

It can be learned that the first constellation point is a constellation point obtained through phase rotation on the second constellation point. This means that each constellation point in the first constellation points is in one-to-one correspondence with each constellation point in the second constellation points. For example, the second constellation points include a constellation point #1, a constellation point #2, and a constellation point #3, a constellation point #11 may be obtained through phase rotation on the constellation point #1, a constellation point #22 may be obtained through phase rotation on the constellation point #2, and a constellation point #33 may be obtained through phase rotation on the constellation point #3. In this case, the first constellation points include the constellation point #11, the constellation point #22, and the constellation point #33. That is, the constellation point #1 corresponds to the constellation point #11, the constellation point #2 corresponds to the constellation point #22, and the constellation point #3 corresponds to the constellation point #33. The phase of the first constellation point is different from the phase of the second constellation point, in other words, a phase of each constellation point in the first constellation points is different from the phase of each constellation point in the corresponding second constellation points. Still in the foregoing example, a phase of the constellation point #1 is different from a phase of the constellation point #11, a phase of the constellation point #2 is different from a phase of the constellation point #22, and a phase of the constellation point #3 is different from a phase of the constellation point #33.

It may be understood that, because a signal is sent based on the first constellation diagram to send the to-be-sent data to the second communication apparatus, all the constellation points in the first constellation diagram are in one-to-one correspondence with all the constellation points in the second constellation diagram. For example, when the second constellation points are all the constellation points in the second constellation diagram, all the constellation points in the first constellation diagram are second constellation points obtained through phase rotation. For another example, when the second constellation diagram includes b+d constellation points, and the second constellation points are d constellation points (a part of constellation points) in the second constellation diagram, all the constellation points in the first constellation diagram are d constellation points that are in the second constellation diagram and that are obtained through phase rotation, and b constellation points that are in the second constellation diagram and whose phases remain unchanged.

It may be further understood that, that the phases of the b constellation points remain unchanged may be that phase rotation is not performed on the constellation points in the b constellation points; or phase rotation is performed on the constellation points in the b constellation points, but phase rotation amounts of the constellation points are a multiple of $2\pi$, so that the phases of the constellation points remain unchanged. This is not limited in this embodiment of this application.

There are a plurality of manners of determining the phase rotation amount #L, and the following separately describes the manners.

In a possible implementation, the phase rotation amount #L is preset. In other words, a phase rotation amount of each constellation point in the second constellation points may be preset.

For example, the second constellation points are first 20 constellation points in the second constellation diagram. In the 20 constellation points, rotation amounts of first 10 constellation points may be preset to $\pi/2$, and rotation amounts of last 10 constellation points may be preset to $3\pi/2$. For descriptions of a sequence of the constellation points, refer to the foregoing related descriptions. Details are not described herein again.

For another example, the second constellation points are all the constellation points in the second constellation diagram, an initial rotation amount is preset to $\pi/4$, and a rotation increment is preset to $\pi/4$. In addition, based on a sequence of the constellation points in the second constellation points, the rotation increment is added once every 10 constellation points, that is, phase rotation amounts of a 1st constellation point to a 10th constellation point in the second constellation points are $\pi/4$, phase rotation amounts of an 11th constellation point to a 20th constellation point are $\pi/2$, and phase rotation amounts of a 21st constellation point to a 30th constellation point are $3\pi/4$. In this way, the phase rotation amount corresponding to each constellation point in the second constellation points, that is, the phase rotation amount #L, may be determined.

In another possible implementation, the phase rotation amount #L is determined based on information about a legitimate channel.

The legitimate channel is a channel between a transmit end and a legitimate receive end. In other words, in this embodiment of this application, the legitimate channel is a channel between the first communication apparatus (the transmit end) and the second communication apparatus (the legitimate receive end). The legitimate channel may be used to carry a signal sent or received by the first communication apparatus or the second communication apparatus. In other words, the legitimate channel may be used to carry the signal (a first signal) sent based on the first constellation diagram. The information about the legitimate channel is information that can be obtained from the legitimate channel, for example, a channel gain matrix of the legitimate channel, a modulus value of a channel gain in a channel gain matrix of the legitimate channel, or an angle of a channel gain in a channel gain matrix of the legitimate channel. Because an eavesdropper cannot obtain the legitimate channel, the eavesdropper cannot obtain the phase rotation amount #L and a second key used for decryption. Further, the eavesdropper cannot decrypt a received constellation point, to obtain the data carried by each constellation point. In this way, security of signal transmission can be improved.

It may be understood that for a terminal apparatus and a network device, the terminal apparatus may send an uplink pilot to the network device, so that the network device performs channel estimation based on the uplink pilot, to obtain information about an uplink legitimate channel. Correspondingly, the network device may send information and a channel-associated pilot to the terminal apparatus, so that the terminal apparatus can perform channel estimation based on the channel-associated pilot, to obtain information about a downlink legitimate channel. In other words, both the terminal apparatus and the network device may independently complete channel estimation, and obtain the information about the uplink legitimate channel or the information about the downlink legitimate channel. In this embodiment of this application, the first communication apparatus and the second communication apparatus may be terminal apparatuses or network devices. When the first communication apparatus and the second communication apparatus are different devices, the foregoing method may be used to obtain the information about the legitimate channel.

It may be further understood that, during time-division duplexing (time-division duplexing, TDD), the uplink legitimate channel and the downlink legitimate channel have reciprocity. In this case, the information that is about the legitimate channel and that is obtained by the first communication apparatus is basically the same as the information that is about the legitimate channel and that is obtained by the second communication apparatus, that is, the information that is about the legitimate channel and that is obtained by the first communication apparatus and the information that is about the legitimate channel and that is obtained by the second communication apparatus may be considered to be equivalent. In other words, there may be a difference between the information that is about the legitimate channel and that is obtained by the first communication apparatus and the information that is about the legitimate channel and that is obtained by the second communication apparatus. However, because the difference is small, subsequent operations of the second communication apparatus are not affected. For example, the second communication apparatus determines a phase rotation amount of a third constellation point based on the information about the legitimate channel. For related descriptions of the subsequent operations, refer to S503 to S505 below.

Optionally, the information about the legitimate channel includes the channel gain in the channel gain matrix of the legitimate channel. In other words, the phase rotation amount #L may be determined based on the channel gain.

The phase rotation amount #Li may be determined based on an initial phase rotation amount, a unit phase rotation amount, and a quantity of unit phase rotation amounts. In this case, an expression of the phase rotation amount #Li may be: $e^{j(\theta_0 + \Delta\theta \times \eta)}$, where $\theta_0$ is the initial phase rotation amount, $\Delta\theta$ is the unit phase rotation amount, and $\eta$ is the quantity of unit phase rotation amounts.

The initial phase rotation amount may be preset or protocol-predefined, and the initial phase rotation amount may be any angle value. For example, the initial phase rotation amount may be $\pi/4$, $\pi/2$, or $5\pi/2$.

In a possible implementation, the unit phase rotation amount is a value obtained by dividing $2\pi$ by m, and m is an integer greater than or equal to 2. It can be learned that m corresponds to a quantity of parts into which a unit circle is equally divided. For example, when m is 2, the unit phase rotation amount is $\pi$, that is, the unit circle is equally divided into two parts. For another example, when m is 6, the unit phase rotation amount is $\pi/3$, that is, the unit circle is equally divided into six parts. In other words, after a value of m is determined, several rotation manners of each constellation point in the second constellation points may be determined, that is, m may represent a total quantity of rotation manners of each constellation point in the second constellation points. For example, when the initial phase rotation amount is 0 and m is 4, the unit phase rotation amount is $\pi/2$. In this case, the phase rotation amount of each constellation point in the second constellation points may be $\pi/2$, $\pi$, or $3\pi/2$, that is, each constellation point has three rotation manners. Alternatively, when the initial phase rotation amount is $\pi/4$ and m is 2, the unit phase rotation amount is $\pi$. In this case, the phase rotation amount of each constellation point may be $5\pi/4$ or $9\pi/4$.

In a possible implementation, m is an integer greater than or equal to 2 and less than or equal to a first threshold. Optionally, the first threshold may be $2^n$, and n is a modulation order. For example, when the modulation order is 2, m may be 2 or 4; or when the modulation order is 4, m may be 2, 4, 6, 8, 10, 12, 14, or 16. It may be understood that m may represent a quantity of locations to which a constellation point may be rotated, that is, a total quantity of rotation manners of each constellation point in the second constellation points. m is set to a value greater than or equal to 2 and less than or equal to $2^n$, to enable the quantity of locations to which the constellation point is rotated to be not excessively large. In this way, encryption complexity of the first communication apparatus can be reduced. It may be understood that the first threshold may alternatively be set to another value based on an actual situation. This is not limited in this embodiment of this application.

In a possible implementation, the quantity of unit phase rotation amounts is related to the value of m. Optionally, a value of the quantity is from a to a+m-1, where a is an integer greater than or equal to 0, for example, from 0 to m-1, that is, the quantity of unit phase rotation amounts is greater than or equal to 0 and less than or equal to m-1; or from 1 to m, that is, the quantity of unit phase rotation amounts is greater than or equal to 1 and less than or equal to m. A specific value of the unit phase rotation amount may be determined by the channel gain.

For example, m-1 thresholds may be determined based on m and a largest modulus value and a smallest modulus value of channel gains in the channel gain matrix corresponding to the legitimate channel, that is, modulus values of the channel gains are divided into m ranges, and each range represents a value from a to a+m-1, so that a modulus value corresponding to any channel gain corresponds to a range. Because a correspondence between each constellation point in the second constellation points and the channel gain in the channel gain matrix may be preset, a channel gain corresponding to each constellation point in the second constellation points and a modulus value corresponding to the channel gain may be determined, so that by determining a specific range in which the modulus value is located, a quantity of unit phase rotation amounts corresponding to the range is determined.

For example, a channel gain matrix corresponding to a physical channel is $H = \begin{bmatrix} h_{11} & h_{12} & \cdots \\ h_{21} & h_{21} & \cdots \\ \vdots & \vdots & \ddots \end{bmatrix}$, where the

channel gain matrix is a matrix with p rows and q columns, and both p and q are integers greater than 0. The constellation points in the second constellation points respectively correspond to a 1st channel gain in a 1st row, a 2nd channel gain in the 1st row, ..., and a qth channel gain in a pth row in the channel gain matrix in sequence. In other words, gains in the channel gain matrix respectively correspond to the constellation points in the second constellation points from left to right and from top to bottom in sequence. It is assumed that, in the channel gain matrix, a channel gain with a largest modulus value is $h_{11}$, a channel gain with a smallest modulus value is $h_{21}$, and m=4. Therefore, a range from $\|h_{11}\|$ to $\|h_{21}\|$ may be evenly divided into four parts, for example, an interval 1 to an interval 4. A threshold exists between every two adjacent intervals, so that three thresholds: $Th_1$, $Th_2$, and $Th_3$, can be obtained. Each interval is associated with a quantity of unit phase rotation amounts. For example, a quantity corresponding to the interval 1 is 0, a quantity corresponding to the interval 2 is 1, a quantity corresponding to the interval 3 is 2, and a quantity corresponding to the interval 4 is 3, so that a quantity of unit phase rotation amounts corresponding to a channel gain can be determined by determining a value relationship between a modulus value of the channel gain and a threshold. For example, if $\|h_{ij}\| < Th_1$, a quantity of unit phase rotation amounts is 0; if $Th_1 \le \|h_{ij}\| < Th_2$, a quantity of unit phase rotation amounts is 1; if $Th_2 \le \|h_{ij}\| < Th_3$, a quantity of unit phase rotation amounts is 2; or if $\|h_{ij}\| \ge Th_3$, a quantity of unit phase rotation amounts is 3. In other words, in this case, the quantity of unit phase

rotation amounts is $\eta = \begin{cases} 0, & \|h_{ij}\| < Th_1 \\ 1, Th_1 \le \|h_{ij}\| < Th_2 \\ 2, Th_2 \le \|h_{ij}\| < Th_3 \\ 3, & Th_3 \le \|h_{ij}\| \end{cases}$. For another example, if $\|h_{ij}\| \le Th_1$, a quantity of unit phase rotation amounts is 0; if $Th_1 < \|h_{ij}\| \le Th_2$, a quantity of unit phase rotation amounts is 1; if $Th_2 < \|h_{ij}\| \le Th_3$, a quantity of unit phase rotation amounts is 2; or if $\|h_{ij}\| > Th_3$, a quantity of unit phase rotation amounts is 3. In other words, in this case, the quantity of unit phase rotation amounts is $\eta = \begin{cases} 0, & \|h_{ij}\| \le Th_1 \\ 1, Th_1 < \|h_{ij}\| \le Th_2 \\ 2, Th_2 < \|h_{ij}\| \le Th_3 \\ 3, & Th_3 < \|h_{ij}\| \end{cases}$ .

In a possible implementation, the modulus value of the channel gain in the foregoing example may be alternatively replaced with an angle value. In other words, m-1 thresholds may be determined based on m and a largest angle value and a smallest angle value of channel gains in a channel gain matrix corresponding to a physical channel, that is, angle values of the channel gains are divided into m ranges, and each range represents a value from a to a+m-1, so that an angle value corresponding to any channel gain corresponds to a range. Because a correspondence between each constellation point in the second constellation points and the channel gain in the channel gain matrix may be preset, a channel gain corresponding to each constellation point in the second constellation points and an angle value corresponding to the channel gain may be determined, so that by determining a specific range in which the angle value is located, a quantity of unit phase rotation amounts corresponding to the range is determined.

For example, a new function G(H) may be further constructed based on the channel gain matrix corresponding to the legitimate channel, one or more channel gains $h_{ij}$ in the channel gain matrix are inputted as input data into the function G(H), and an integer value in a value range from a to a+m-1 is output according to the function G(H). In other words, a channel gain whose value is a complex number is mapped to a range from a to a+m-1 in an integer domain according to the function G(H), and the output integer value is the quantity of unit phase rotation amounts $\eta$. A mapping relationship between each constellation point in the second constellation points and a value of the function G(H), in other words, a correspondence between each constellation point and the one or more input channel gains $h_{ij}$ in the channel gain matrix of the legitimate channel, is preset. The one or more channel gains corresponding to each constellation point in the second constellation points may be determined based on the mapping relationship, and a value $G(h_{ij})$ may be obtained by inputting the one or more channel gains $h_{ij}$ as the input data into the function G(H), and a quantity of unit phase rotation amounts corresponding to the constellation point may be determined based on a mapping relationship between $G(h_{ij})$ and the quantity of unit phase rotation amounts.

It may be understood that there may be a plurality of types of correspondences between each constellation point in the second constellation points and the channel gain in the channel gain matrix. For example, in a sequence of the constellation points in the second constellation points, every 10 constellation points in the second constellation points correspond to channel gains in the channel gain matrix from top to bottom and from right to left successively. For another example, in a sequence of the constellation points in the second constellation points, the constellation points in the second constellation points corresponds to channel gains in the channel gain matrix from bottom to top and from right to left successively. This is not limited in this embodiment of this application.

It may be further understood that, for the second constellation point, when the initial phase rotation amount is 0, the quantity of unit phase rotation amounts is not set to 0 or xm, where x is an integer greater than 0; or when the quantity of unit phase rotation amounts is set to a value like 0 or xm, the initial phase rotation amount is not set to 0, so that a determined phase rotation amount being a multiple of $2\pi$, and a phase after rotation of the constellation point being the same as a phase before rotation can be avoided. In this case, phase rotation is performed on each constellation point in the second constellation points. In other words, in this case, a phase rotation amount corresponding to no constellation point in the second constellation points is 0 or a multiple of $2\pi$. Phase rotation may be performed or no phase rotation may be performed on a constellation point other than the second constellation points in the second constellation diagram, and when phase rotation is performed on the constellation point other than the second constellation points in the second constellation diagram, a phase rotation amount during the phase rotation is a multiple of $2\pi$.

The foregoing describes related content of the initial phase rotation amount, the unit phase rotation amount, and the unit phase rotation amount. The following uses an example to describe how to determine the phase rotation amount #L based on each parameter.

Example 1

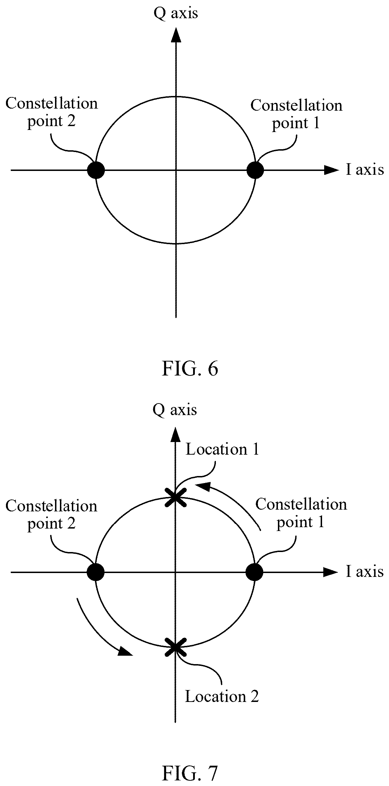

As shown in FIG. 6, a modulation scheme is BPSK, and the BPSK corresponds to two constellation points: a constellation point 1 and a constellation point 2. Each of the two constellation points is located on an I axis, and a phase difference is $\pi$. Each constellation point in the second constellation diagram is located at the constellation point 1 or the constellation point 2.

It is assumed that the initial phase rotation amount is $\pi/2$, m=2, the unit phase rotation amount is $\pi$, and a value range of the quantity of unit phase rotation amounts is $\eta \in \{0,1\}$. In this case, the phase rotation amount #Li is

$e^{j(\theta_0 + \Delta\theta \times \eta)} = \begin{cases} e^{j\left(\frac{\pi}{2} + \pi \times 0\right), \eta=0} \\ e^{j\left(\frac{\pi}{2} + \pi \times 1\right), \eta=1} \end{cases}$ . In other words, as shown in FIG. 7, for any constellation point in the second constellation points, there are two phase rotation amounts: $\pi/2$ and $-\pi/2$. To be specific, for any constellation point in the second constellation points, a location of the constellation point after phase rotation is a location 1 or a location 2 in FIG. 7. A specific location to which the constellation point is rotated (that is, a value of $\eta$ corresponding to the constellation point) may be determined based on a channel gain corresponding to the constellation point. For a specific determining method, refer to the foregoing related descriptions. Details are not described herein again.

It may be understood that when the initial phase rotation amount is $\pi/4$, the phase rotation amount #Li of the any constellation point in the second constellation points is $e^{j(\theta_0 + \Delta\theta \times \eta)} = \begin{cases} e^{j\left(\frac{\pi}{4} + \pi \times 0\right), \eta=0} \\ e^{j\left(\frac{\pi}{4} + \pi \times 1\right), \eta=1} \end{cases}$. In other words, as shown in FIG.

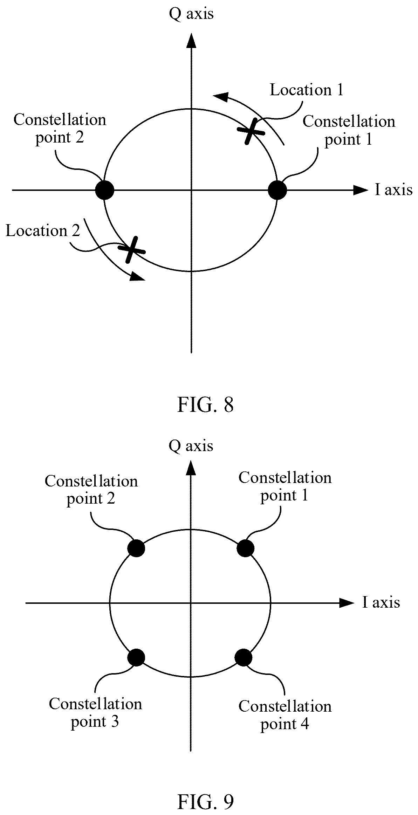

8, for any constellation point in the second constellation points, there are two rotation phases: rotation by $\pi/4$ and rotation by $3\pi/4$. To be specific, for any constellation point in the second constellation points, a location of the constellation point after phase rotation is a location 1 or a location 2 in FIG. 8. A specific location to which the constellation point is rotated may be determined based on a channel gain corresponding to the constellation point. For a specific determining method, refer to the foregoing related descriptions. Details are not described herein again.

Example 2

As shown in FIG. 9, a modulation scheme is 4-QAM, and the 4-QAM corresponds to four constellation points: a constellation point 1, a constellation point 2, a constellation point 3, and a constellation point 4. Each constellation point in the second constellation diagram is located at the constellation point 1, the constellation point 2, the constellation point 3, or the constellation point 4.

It is assumed that the initial phase rotation amount is $\pi/4$, m=4, the unit phase rotation amount is $\pi/2$, and a value range of the quantity of unit phase rotation amounts is $\eta \in \{0,1,2,3\}$. In this case, the phase rotation amount #Li is

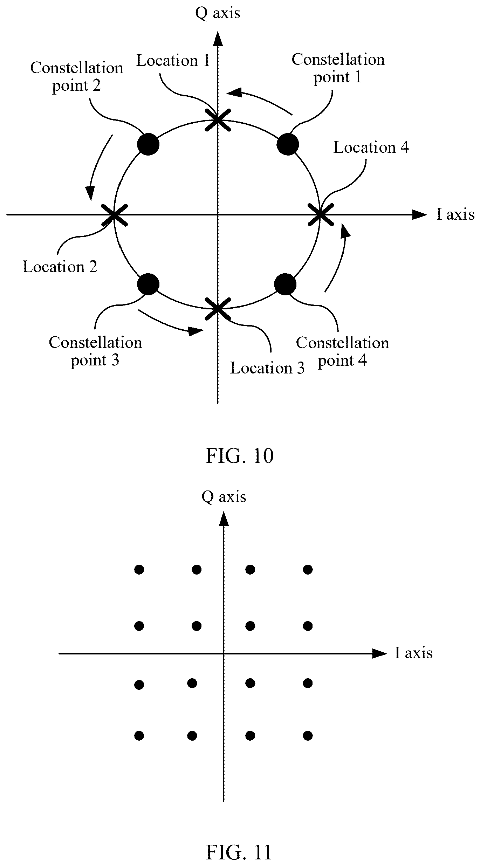

$e^{j(\theta_0 + \Delta\theta \times \eta)} = \begin{cases} e^{j\left(\frac{\pi}{4} + \frac{\pi}{2} \times 0\right), \eta=0} \\ e^{j\left(\frac{\pi}{4} + \frac{\pi}{2} \times 1\right), \eta=1} \\ e^{j\left(\frac{\pi}{4} + \frac{\pi}{2} \times 2\right), \eta=2} \\ e^{j\left(\frac{\pi}{4} + \frac{\pi}{2} \times 3\right), \eta=3} \end{cases}$. In other words, as shown in FIG. 10, for any constellation point in the second constellation points, there are four phase rotation amounts: $\pi/4$, $3\pi/4$, $5\pi/4$, and $7\pi/4$. To be specific, for any constellation point in the second constellation points, a location of the constellation point after phase rotation is a location 1, a location 2, a location 3, or a location 4 in FIG. 9. A specific location to which the constellation point is rotated (that is, a value of $\eta$ corresponding to the constellation point) may be determined based on a channel gain corresponding to the constellation point. For a specific determining method, refer to the foregoing related descriptions. Details are not described herein again.

Example 3

As shown in FIG. 11, a modulation scheme is 16-QAM, and the 16-QAM corresponds to 16 constellation points: a constellation point 1 to a constellation point 16. Each constellation point in the first constellation diagram is located at any one of the constellation point 1 to the constellation point 16.

It is assumed that the initial phase rotation amount is $\pi/2$, m=4, the unit phase rotation amount is $\pi/2$, and a value range of the quantity of unit phase rotation amounts is $\eta \in \{0,1,2,3\}$. In this case, the phase rotation amount #Li is

$e^{j(\theta_0 + \Delta\theta \times \eta)} = \begin{cases} e^{j\left(\frac{\pi}{2} + \frac{\pi}{2} \times 0\right), \eta=0} \\ e^{j\left(\frac{\pi}{2} + \frac{\pi}{2} \times 1\right), \eta=1} \\ e^{j\left(\frac{\pi}{2} + \frac{\pi}{2} \times 2\right), \eta=2} \\ e^{j\left(\frac{\pi}{2} + \frac{\pi}{2} \times 3\right), \eta=3} \end{cases}$. In other words, for any constellation point in the second constellation points, there are four phase rotation amounts: $\pi/2$, $\pi$, $3\pi/2$, and $2\pi$. A specific location to which the constellation point is rotated (that is, a value of $\eta$ corresponding to the constellation point) may be determined based on a channel gain corresponding to the constellation point. For a specific determining method, refer to the foregoing related descriptions. Details are not described herein again.

It may be understood that the foregoing content describes how to generate the first constellation diagram. For the first communication apparatus, the first constellation diagram may be obtained by the first communication apparatus by autonomously generating the first constellation diagram; or the first constellation diagram is generated by another apparatus, and the first communication apparatus obtains the first constellation diagram from the another apparatus. This is not limited in this embodiment of this application.

S502: The first communication apparatus sends the first signal based on the first constellation diagram.

Correspondingly, the second communication apparatus receives a second signal corresponding to the first signal.

The first communication apparatus may send the first signal through the legitimate channel based on the first constellation diagram and an internal implementation algorithm of a transmitter. The first signal corresponds to each constellation point in the first constellation diagram. The internal implementation algorithm of the transmitter may be implemented by reusing a method in a conventional technology. This is not limited in this embodiment of this application.

It may be understood that the second signal is a signal obtained through transmission of the first signal through the legitimate channel. Because a factor like noise exists in a transmission process, there may be a deviation between the first signal sent by the first communication apparatus and the second signal received by the second communication apparatus. Because the deviation is small, the second signal may be equivalent to the first signal. In other words, the deviation does not affect a subsequent operation of the second communication apparatus, for example, determining a third constellation diagram based on the second signal.

S503: The second communication apparatus determines the third constellation diagram based on the received second signal.

The second communication apparatus determines the third constellation diagram based on the second signal received through the legitimate channel. For example, the third constellation diagram may be determined based on an internal implementation algorithm of a receiver. The internal implementation algorithm of the receiver may be implemented by reusing a method in the conventional technology. This is not limited in this embodiment of this application.

It may be understood that the foregoing internal implementation algorithm of the transmitter corresponds to the internal implementation algorithm of the receiver, so that after determining the third constellation diagram, the second communication apparatus can enable each constellation point in the third constellation diagram to one-to-one correspond to each constellation point in the first constellation diagram, and a manner of implementing a correspondence between the constellation points may be enabling different constellation points to correspond to each other by using an identifier of each constellation point in the first constellation diagram and an identifier of each constellation point in the third constellation diagram.

For example, the first communication apparatus sends M constellation points: a constellation point #1 to a constellation point #M, in the first constellation diagram in sequence. An identifier of any constellation point in the M constellation points is an ID #i, and a value of i is from 1 to M. For example, an identifier of the constellation point #1 is an ID #1. The second communication apparatus receives M constellation points: a constellation point #11 to a constellation point #MM. An identifier of any constellation point in the M constellation points is an ID #ii, and a value of i is from 1 to M. For example, an identifier of the constellation point #11 is an ID#11. The ID #i may be preset to correspond to the ID #ii. Therefore, the constellation point #i may correspond to the constellation point #ii by using the identifiers. For example, the constellation point #1 may correspond to the constellation point #11 by using the ID #1 and the ID #11. In this way, the sent constellation points can correspond to the received constellation points.

It may be further understood that a signal is interfered with in a transmission process, that is, a constellation point is interfered with in the transmission process, so that a location of the constellation point can be deviated. Therefore, there may be a deviation between a location of a constellation point sent by the transmit end and a location of a constellation point received by the receive end. In other words, a constellation diagram sent by the transmit end is different from a constellation diagram received by the receive end. In this embodiment of this application, to distinguish between a constellation diagram sent by the first communication apparatus (the transmit end) and a constellation diagram received by the second communication apparatus (the receive end), the constellation diagram sent by the first communication apparatus is named the first constellation diagram, and the constellation diagram received by the second communication apparatus is named the third constellation diagram. The third constellation diagram corresponds to the first constellation diagram. It may be understood that there may be a deviation between a location of a constellation point in the third constellation diagram and a location of a constellation point in the first constellation diagram. However, the deviation does not affect subsequent decryption of the second communication apparatus and signal demodulation performed based on a decrypted constellation diagram.

S504: The second communication apparatus determines a fourth constellation diagram based on the third constellation diagram.

The fourth constellation diagram includes fourth constellation points, the fourth constellation point is obtained by decrypting the third constellation point in the third constellation diagram based on the second key, and a phase of the third constellation point is different from a phase of the fourth constellation point. In other words, the fourth constellation diagram is obtained by rotating phases of third constellation points in the third constellation diagram based on the second key. The first key and the second key are a pair of keys. For example, a phase of a constellation point may be rotated based on the first key, and a phase of the constellation point may be rotated reversely based on the second key, so that the phase of the constellation point is restored to the original phase. For example, if the first key and the second key each are represented by a diagonal unitary matrix, each diagonal element in a diagonal unitary matrix corresponding to the first key and each diagonal element in a diagonal unitary matrix corresponding to the second key are in a reciprocal relationship. For related descriptions, refer to the following.

It may be understood that a process in which the second communication apparatus decrypts the third constellation point is an inverse process of a process in which the first communication apparatus encrypts the second constellation point. In other words, a decryption operation of the second communication apparatus is an operation opposite to an encryption operation of the first communication apparatus. In an example, the first communication apparatus rotates the phase of the second constellation point based on the first key. For example, if each constellation point in the second constellation points is rotated by $\pi/2$, the second communication apparatus needs to rotate the phase of the third constellation point reversely based on the second key, that is, each constellation point in the third constellation points is rotated by $-\pi/2$. It can be learned that the second communication apparatus decrypts the third constellation point to obtain the fourth constellation point corresponding to the second constellation point. Because the third constellation diagram corresponds to the first constellation diagram, the fourth constellation diagram corresponds to the second constellation diagram.

It may be further understood that because there may be a deviation between a constellation point in the third constellation diagram and a constellation point in the first constellation diagram, there may be a deviation between a constellation point in the fourth constellation diagram and a constellation point in the second constellation diagram. However, the deviation affects neither subsequent demodulation based on the fourth constellation diagram and nor subsequent obtaining of data corresponding to the to-be-sent data.

For ease of understanding, the following first describes the third constellation diagram, and then describes the fourth constellation diagram.

The third constellation diagram includes the third constellation points. The third constellation point corresponds to the first constellation point obtained through encryption of the second constellation point. In other words, each constellation point in the third constellation points may correspond to each constellation point in the first constellation points by using an identifier of each constellation point in the third constellation points and an identifier of each constellation point in the first constellation points. For specific implementation, refer to the foregoing related descriptions. In other words, the third constellation point may correspond to the first constellation point, that is, a location of the third constellation point in all constellation points in the third constellation diagram is the same as a location of the second constellation point in all constellation points in the first constellation diagram. The location of the third constellation point in all constellation points in the third constellation diagram and the location of the second constellation point in all constellation points in the second constellation diagram may be preset. For example, first n constellation points in all constellation points are preset as constellation points that need to be rotated, that is, first n constellation points in all the constellation points in the third constellation diagram are the third constellation points, and the first n constellation points in all the constellation points in the second constellation diagram are the second constellation points. For another example, all constellation points are preset as constellation points that need to be rotated, that is, all the constellation points in the third constellation diagram are the third constellation points, and all the constellation points in the second constellation diagram are the second constellation points.

The second key represents a phase rotation amount (denoted as a phase rotation amount #K) between the third constellation point and the fourth constellation point. In other words, the second key may represent a phase rotation amount of each constellation point in the third constellation points during phase rotation. It may be understood that, if a phase rotation amount of any constellation point in the third constellation points during phase rotation is denoted as a phase rotation amount #Ki, a value of i is from 1 to N, i is a positive integer, and N is a quantity of all the constellation points in the third constellation points, the phase rotation amount #K includes the phase rotation amount #Ki. In this case, i is successively set to 1 to N.

For example, the second key may be represented by a second diagonal unitary matrix, a modulus of each diagonal element in the second diagonal unitary matrix is 1, and a value of each diagonal element in the second diagonal unitary matrix is the phase rotation amount #Ki, that is, a value of a diagonal element in the second diagonal unitary matrix is the phase rotation amount #K between the third constellation point and the fourth constellation. In other words, the phase rotation amount #K may include the corresponding phase rotation amount of each constellation point in the third constellation points during phase rotation. For example, the third constellation points include a constellation point #A, a constellation point #B, and a constellation point #C. In this case, the phase rotation amount #K includes a phase rotation amount #A of the constellation point #A, a phase rotation amount #B of the constellation point #B, and a phase rotation amount #C of the constellation point #C. A manner of determining the phase rotation amount #K is described below. By setting the second key to the unitary matrix and setting the modulus of each diagonal element in the second diagonal unitary matrix to 1, a phase of each constellation point in the third constellation points may be rotated without changing energy of a symbol corresponding to each constellation point in the third constellation points, to ensure that the third constellation point is restored to the fourth constellation point corresponding to the first constellation point.

For example, the second diagonal unitary matrix is $U_1 = \begin{bmatrix} e^{-j\theta_1} & \cdots & 0 \\ \vdots & \ddots & \vdots \\ 0 & \cdots & e^{-j\theta_N} \end{bmatrix}$, in other words, diagonal elements in the second diagonal unitary matrix are $e^{-j\theta_1}$, ..., and $e^{-j\theta_N}$, where N is an integer greater than 0. It can be learned that, a value of $e^{-j\theta_i}$ is the phase rotation amount #Ki, a value of i is from 1 to N, and i is a positive integer. In other words, a value of $e^{-j\theta_1}$, ..., and $e^{-j\theta_N}$ is the phase rotation amount #L.

It may be understood that a correspondence between the diagonal element in the second diagonal unitary matrix and each constellation point in the third constellation points may be preset or protocol-predefined. For example, a diagonal element in an $i^{th}$ row in the second diagonal unitary matrix is preset or predefined to correspond to an $i^{th}$ constellation point in the third constellation points, where i is successively set to 1 to N, i is a positive integer, and N is the quantity of all the constellation points in the third constellation points. In this way, each diagonal element may correspond to each constellation point in the third constellation points. It may be further understood that the foregoing correspondence between each diagonal element and each constellation point in the third constellation points is merely an example of this embodiment of this application. Alternatively, there may be another correspondence between each diagonal element in the second diagonal unitary matrix and each constellation point in the third constellation points. This is not limited in this embodiment of this application.

The fourth constellation point may be obtained through phase rotation on the third constellation point based on the second key. In other words, each diagonal element in the second diagonal unitary matrix acts on each constellation point in the third constellation points, so that the phase of each constellation point in the third constellation points can be rotated, to obtain the fourth constellation point.

It can be learned that the fourth constellation point is a constellation point obtained through phase rotation on the third constellation point. This means that each constellation point in the third constellation points is in one-to-one correspondence with each constellation point in the fourth constellation points. For example, the third constellation points include a constellation point #4, a constellation point #5, and a constellation point #6, a constellation point #44 may be obtained through phase rotation on the constellation point #4, a constellation point #55 may be obtained through phase rotation on the constellation point #5, and a constellation point #66 may be obtained through phase rotation on the constellation point #6. In this case, the fourth constellation points include the constellation point #44, the constellation point #55, and the constellation point #66. That is, the constellation point #4 corresponds to the constellation point #44, the constellation point #5 corresponds to the constellation point #55, and the constellation point #6 corresponds to the constellation point #66. In addition, the phase of the third constellation point is different from the phase of the fourth constellation point. In other words, the phase of each constellation point in the third constellation points is different from a phase of each constellation point in the corresponding fourth constellation points. Still in the foregoing example, a phase of the constellation point #4 is different from a phase of the constellation point #44, a phase of the constellation point #5 is different from a phase of the constellation point #55, and a phase of the constellation point #6 is different from a phase of the constellation point #66.

It may be understood that all constellation points in the third constellation diagram are in one-to-one correspondence with all constellation points in the fourth constellation diagram. For example, when the third constellation points are all the constellation points in the third constellation diagram, all the constellation points in the fourth constellation diagram are third constellation points obtained through phase rotation. For another example, when the third constellation diagram includes b+d constellation points, and the third constellation points are d constellation points (a part of constellation points) in the third constellation diagram, all the constellation points in the fourth constellation diagram are d constellation points that are in the third constellation diagram and that are obtained through phase rotation, and b constellation points that are in the third constellation diagram and whose phases remain unchanged.

It may be further understood that, that the phases of the b constellation points remain unchanged may be that phase rotation is not performed on the constellation points in the b constellation points; or phase rotation is performed on the constellation points in the b constellation points, but phase rotation amounts are a multiple of $2\pi$, so that the phases of the constellation points remain unchanged. This is not limited in this embodiment of this application.

There are a plurality of manners of determining the phase rotation amount #K, and the following separately describes the manners.

In a possible implementation, the phase rotation amount #K is preset. In other words, the phase rotation amount #Ki of each constellation point in the third constellation points is preset. For example, the third constellation points are first 20 constellation points in the third constellation diagram. In the 20 constellation points, phase rotation amounts of first 10 constellation points are preset to $-\pi/2$, and rotation amounts of last 10 constellation points are preset to $-3\pi/2$. For related descriptions of a sequence of the constellation points, refer to the foregoing related descriptions. Details are not described herein again.

It may be understood that, because the third constellation point needs to be decrypted to obtain the fourth constellation point corresponding to the second constellation point, the phase rotation amount of each constellation point in the third constellation points is opposite to the phase rotation amount of each constellation point in the second constellation points. For example, the second constellation points include a constellation point #aa, a constellation point #bb, and a constellation point #cc, a phase rotation amount of the constellation point #aa is $\pi/4$, a phase rotation amount of the constellation point #bb is $\pi/2$, a phase rotation amount of the constellation point #cc is $3\pi/4$, and the third constellation points include a constellation point #AA corresponding to the constellation point #aa, a constellation point #BB corresponding to the constellation point #bb, and a constellation point #CC corresponding to the constellation point #cc. In this case, a phase rotation amount of the constellation point #AA is -π/4, a phase rotation amount of the constellation point #BB is -π/2, and a phase rotation amount of the constellation point #cc is -3π/4.

In another possible implementation, the phase rotation amount #K is determined based on the information about the legitimate channel.

For descriptions of the legitimate channel and the information about the legitimate channel, refer to related descriptions in S501. Details are not described herein again.

Optionally, the information about the legitimate channel includes the channel gain in the channel gain matrix of the legitimate channel. In other words, the phase rotation amount #K may be determined based on the channel gain.

The phase rotation amount #Ki may be determined based on an initial phase rotation amount, a unit phase rotation amount, and a quantity of unit phase rotation amounts. In this case, an expression of the phase rotation amount #Ki may be: $e^{-j(\theta_0 + \Delta\theta \times \eta)}$, where $\theta_0$ is the initial phase rotation amount, $\Delta\theta$ is the unit phase rotation amount, and $\eta$ is the quantity of unit phase rotation amounts. For descriptions of the initial phase rotation amount, the unit phase rotation amount, and the unit phase rotation amount, refer to related descriptions in S501. Details are not described herein again.

It can be learned that the expression of the phase rotation amount #Li and the expression of the phase rotation amount #Ki are in a reciprocal relationship. In other words, when values of the initial phase rotation amounts, the unit phase rotation amounts, and the quantities of unit phase rotation amounts are the same, a value of a diagonal element in the first diagonal unitary matrix and a value of a diagonal element that is in the second diagonal unitary matrix and that corresponds to the diagonal element are in a reciprocal relationship.

It may be understood that, the initial phase rotation amount and the unit phase rotation amount that are used by the second communication apparatus for decryption are the same as the initial phase rotation amount and the unit phase rotation amount that are used by the first communication apparatus for encryption, and a correspondence between each constellation point in the third constellation points and the channel gain is the same as the correspondence between each constellation point in the second constellation points and the channel gain. In this way, the quantity of unit phase rotation amounts corresponding to each constellation point in the third constellation points may be the same as the quantity of unit phase rotation amounts corresponding to each constellation point in the second constellation points, so that the phase rotation amount corresponding to each constellation point in the third constellation points is opposite to the phase rotation amount corresponding to each constellation point in the second constellation points.

It may be further understood that, the eavesdropper cannot obtain the legitimate channel, that is, the eavesdropper does not have accurate information about the legitimate channel. Therefore, after determining a fifth constellation diagram based on a received signal, the eavesdropper cannot determine phase rotation amounts of constellation points (in other words, constellation points corresponding to the first constellation points) that are in the fifth constellation diagram and that need to be rotated. In this way, for any constellation point in the constellation points that need to be rotated, a probability of determining a phase rotation amount of the constellation point is 1/m, that is, a probability of decrypting the constellation point is 1/m. This means that a symbol error rate of decoding performed by the eavesdropper on any constellation point in the constellation points that need to be rotated is m-l/m. Because there may be a plurality of constellation points that need to be rotated, a probability that the eavesdropper restores a constellation diagram corresponding to the second constellation diagram is $\left(\frac{1}{m}\right)^n$, where n is a quantity of constellation points that need to be rotated. In other words, when there are a large quantity of constellation points that need to be rotated, it is difficult for the eavesdropper to restore the constellation diagram corresponding to the second constellation diagram. It can be learned that a larger value of m represents a larger quantity of locations to which a constellation point may be rotated, so that security of information transmission can be higher; and a smaller value of m represents a smaller quantity of locations to which a constellation point may be rotated, so that encryption complexity of the first communication apparatus and decryption complexity of the second communication apparatus can be reduced.

Still in Example 1, the constellation points that are in the third constellation diagram and that are determined by the second communication apparatus are respectively located at an upper half part and a lower half part of a Q axis, to be specific, around the location 1 and the location 2 shown in FIG. 6. In a decryption process of the second communication apparatus, the initial phase rotation amount is π/2, and m=2, in other words, the unit phase rotation amount is π, and the value range of the quantity of unit phase rotation amounts is $\eta \in \{0,1\}$. In this case, the phase rotation amount #Ki is

$$e^{-j(\theta_0 + \Delta\theta \times \eta)} = \begin{cases} e^{-j\left(\frac{\pi}{2} + \pi \times 0\right)}, \eta = 0 \\ e^{-j\left(\frac{\pi}{2} + \pi \times 1\right)}, \eta = 1 \end{cases}$$

. In other words, for any constellation point in the third constellation points, there are two phase rotation amounts: -π/2 and π/2. A specific location to which the constellation point is rotated may be determined based on a channel gain corresponding to the constellation point. For a specific determining method, refer to the foregoing related descriptions. Details are not described herein again.

It may be understood that, in Example 1, a probability that the eavesdropper decrypts any constellation point in the third constellation points is 1/2, and when there are n constellation points in the third constellation points, a probability that the eavesdropper restores the constellation diagram corresponding to the second constellation diagram is $\left(\frac{1}{2}\right)^n$. In addition, in the BPSK modulation scheme, because a constellation point represents 1-bit information, a bit error rate that is of any constellation point in the third constellation points and that corresponds to the eavesdropper is 1/2. This means that a decoding status of the eavesdropper is equivalent to blind guessing, that is, a current encryption mode may be considered as having perfect security.

Still in Example 2, the constellation points that are in the third constellation diagram and that are determined by the second communication apparatus are respectively located at an upper half part and a lower half part of a Q axis and a left half part and a right half part of an I axis, to be specific, around the location 1, the location 2, the location 3, and the location 4 shown in FIG. 9. In a decryption process of the second communication apparatus, the initial phase rotation amount is $\pi/4$, and m=4, in other words, the unit phase rotation amount is $\pi/2$, and the value range of the quantity of unit phase rotation amounts is $\eta \in \{0,1,2,3\}$. In this case, the phase rotation amount #Ki is

$$e^{-j(\theta_0+\Delta\theta\times\eta)} = \begin{cases} e^{-j\left(\frac{\pi}{4}+\frac{\pi}{2}\times 0\right),\eta=0} \\ e^{-j\left(\frac{\pi}{4}+\frac{\pi}{2}\times 1\right),\eta=1} \\ e^{-j\left(\frac{\pi}{4}+\frac{\pi}{2}\times 2\right),\eta=2} \\ e^{-j\left(\frac{\pi}{4}+\frac{\pi}{2}\times 3\right),\eta=3} \end{cases}.$$

In other words, for any constellation point in the third constellation points, there are four phase rotation amounts: $-\pi/4$, $-3\pi/4$, $-5\pi/4$, and $-7\pi/4$. A specific location to which the constellation point is rotated may be determined based on a channel gain corresponding to the constellation point. For a specific determining method, refer to the foregoing related descriptions. Details are not described herein again.

It may be understood that, in Example 2, a probability that the eavesdropper decrypts any constellation point in the third constellation points is 1/4, and when there are n constellation points in the third constellation points, a probability that the eavesdropper restores the constellation diagram corresponding to the second constellation diagram is $\left(\frac{1}{4}\right)^n$. In addition, in the 4-QAM modulation scheme, because a constellation point represents 2-bit information, a bit error rate that is of any constellation point in the third constellation points and that corresponds to the eavesdropper is 1/2. This means that a decoding status of the eavesdropper is equivalent to blind guessing, that is, a current encryption mode may be considered as having perfect security.

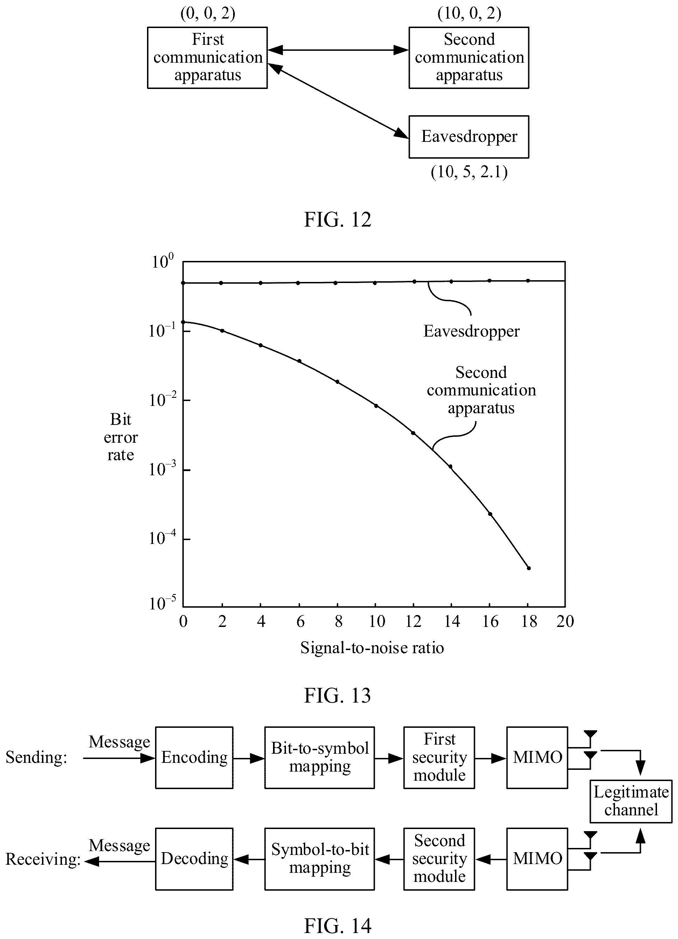

In addition, simulation is performed on Example 2. As shown in FIG. 12, three-dimensional location coordinates of the first communication apparatus, the second communication apparatus, and the eavesdropper are respectively (0, 0, 2), (10, 0, 2), and (10, 5, 2.1). The initial phase rotation amount for encrypting the second constellation point by the first communication apparatus and decrypting the third constellation point by the second communication apparatus is $\pi/4$, m=4, the unit phase rotation amount is $\pi/2$, and the value range of the quantity of unit phase rotation amounts is $\eta\in\{0, 1, 2, 3\}$. A physical distance between the first communication apparatus and the second communication apparatus is 10 meters (m), a physical distance between the second communication apparatus and the eavesdropper is 5 m, and a channel is generated based on a standard 3GPP channel model. A simulation result is shown in FIG. 13. It can be learned that a bit error rate of the eavesdropper is approximately 0.5, and a bit error rate of the second communication apparatus is far lower than 0.5. This means that, in the manner in Example 2, decoding performance of the eavesdropper may be equivalent to blind guessing on a premise that decoding performance of the second communication apparatus is ensured, and a perfect security effect is approximately achieved.

Still in Example 3, the constellation points that are in the third constellation diagram and that are determined by the second communication apparatus are respectively located around constellation points shown in FIG. 10. In a decryption process of the second communication apparatus, the initial phase rotation amount is $\pi/2$, and m=4, in other words, the unit phase rotation amount is $\pi/2$, and the value range of the quantity of unit phase rotation amounts is $\eta \in \{0,1,2,3\}$. In this case, the phase rotation amount #Ki is

$$e^{-j(\theta_0+\Delta\theta\times\eta)} = \begin{cases} e^{-j\left(\frac{\pi}{2}+\frac{\pi}{2}\times 0\right),\eta=0} \\ e^{-j\left(\frac{\pi}{2}+\frac{\pi}{2}\times 1\right),\eta=1} \\ e^{-j\left(\frac{\pi}{2}+\frac{\pi}{2}\times 2\right),\eta=2} \\ e^{-j\left(\frac{\pi}{2}+\frac{\pi}{2}\times 3\right),\eta=3} \end{cases}.$$

In other words, for any constellation point in the third constellation points, there are four phase rotation amounts: $-\pi/2$, $-\pi$, $-3\pi/2$, and $-2\pi$. A specific location to which the constellation point is rotated may be determined based on a channel gain corresponding to the constellation point. For a specific determining method, refer to the foregoing related descriptions. Details are not described herein again.

It may be understood that, in Example 3, a probability that the eavesdropper decrypts any constellation point in the third constellation points is 1/4, and when there are n constellation points in the third constellation points, a probability that the eavesdropper restores the constellation diagram corresponding to the second constellation diagram is $\left(\frac{1}{4}\right)^n$. In addition, in the 4-QAM modulation scheme, because a constellation point represents 2-bit information, a bit error rate that is of any constellation point in the third constellation points and that corresponds to the eavesdropper is 1/4.

S505: The second communication apparatus demodulates the second signal based on the fourth constellation diagram.

After the fourth constellation diagram is obtained, the second signal may be demodulated based on the fourth constellation diagram and a corresponding modulation order, to obtain information carried by each constellation point in the fourth constellation diagram. Demodulating the signal based on the constellation diagram may be implemented by reusing a method in the conventional technology. This is not limited in this embodiment of this application.

In this embodiment of this application, the first communication apparatus performs phase rotation on the second constellation point based on the first key, to encrypt the second constellation point. Correspondingly, the second communication apparatus may perform phase rotation on the third constellation point based on the second key, to decrypt the third constellation point. In this case, the eavesdropper cannot directly decrypt a stolen physical-layer signal, and cannot obtain corresponding data. In this way, data leakage can be avoided, and security of transmission at a physical layer can be improved.

It may be understood that the communication method provided in this embodiment of this application is described by using steps S501 to S505. The following describes a location of the communication method in a procedure of processing of signal sending and receiving with reference to FIG. 14.

As shown in FIG. 14, for the transmit end (the first communication apparatus), sending a signal by the transmit end needs operations of four modules on a message: encoding, bit-to-symbol mapping, a first security module, and multiple-input multiple-output (multiple-input multiple-output, MIMO). The first security module may correspond to operations in S501, and the MIMO may correspond to operations in S502 (sending the first signal). For the receive end (the second communication apparatus), after receiving the signal, the receive end (the second communication apparatus) needs to perform operations of four modules: MIMO, a second security module, symbol-to-bit mapping, and decoding on the received signal. The MIMO may correspond to operations in S502 (receiving the second signal) and S503, the second security module may correspond to operations in S504, and the symbol-to-bit mapping may correspond to operations in S505.

It may be understood that, for specific principles of the foregoing encoding, bit-to-symbol mapping, MIMO, decoding, and symbol-to-bit mapping, refer to principles in the conventional technology. Details are not described herein again. In addition, specific operations of the encoding, the bit-to-symbol mapping, the MIMO, the decoding, and the symbol-to-bit mapping may be implemented by reusing a method in the conventional technology. This is not limited in this embodiment of this application.

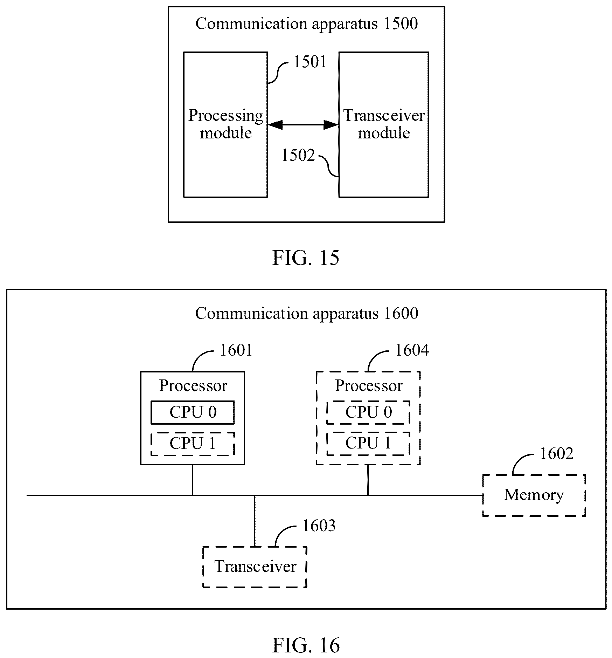

The foregoing describes in detail the communication method provided in embodiments of this application with reference to FIG. 5 to FIG. 14. The following describes in detail communication apparatuses configured to perform the communication method provided in embodiments of this application with reference to FIG. 15 and FIG. 16.

This application provides a communication apparatus. The communication apparatus may be configured to implement the method performed by the first communication apparatus and/or the second communication apparatus in the foregoing method embodiment. The communication apparatus may be a terminal device or a network device, may be an apparatus (for example, a chip, a chip system, or a circuit) in the terminal device or the network device, or may be an apparatus that can be used in cooperation with the terminal device or the network device.

In a possible implementation, the communication apparatus may include one-to-one corresponding modules or units to perform the method/operations/steps/actions described in the foregoing method embodiment. The module or the unit may be a hardware circuit, may be software, or may be implemented by a hardware circuit in combination with software.

For example, FIG. 15 is a first diagram of a structure of a communication apparatus according to an embodiment of this application. As shown in FIG. 15, the communication apparatus 1500 includes a processing module 1501 and a transceiver module 1502. For ease of description, FIG. 15 shows only main components of the communication apparatus.

In some embodiments, the communication apparatus 1500 is applicable to the communication system shown in FIG. 3, and performs a function of the first communication apparatus in the communication method shown in FIG. 5.

The processing module 1501 is configured to obtain a first constellation diagram. The transceiver module 1502 is configured to send a signal based on the first constellation diagram. The first constellation diagram includes first constellation points, the first constellation point is obtained by encrypting a second constellation point in a second constellation diagram based on a first key, the second constellation point is obtained by mapping to-be-sent data, and a phase of the first constellation point is different from a phase of the second constellation point.

In a possible implementation, the first key represents a phase rotation amount between the first constellation point and the second constellation point.

In a possible implementation, the phase rotation amount between the first constellation point and the second constellation point is determined based on information about a legitimate channel, and the legitimate channel is used to carry the signal.

In a possible implementation, the information about the legitimate channel includes channel gains in a channel gain matrix of the legitimate channel.

In a possible implementation, a phase rotation amount of any constellation point in second constellation points is determined based on an initial phase rotation amount, a unit phase rotation amount, and a quantity of unit phase rotation amounts, and the quantity of unit phase rotation amounts is determined based on the channel gain.

In a possible implementation, an expression of the phase rotation amount of the any constellation point in the second constellation points is: $e^{j(\theta_0 + \Delta\theta \times \eta)}$, where $\theta_0$ is the initial phase rotation amount, $\Delta\theta$ is the unit phase rotation amount, and $\eta$ is the quantity of unit phase rotation amounts.

In a possible implementation, the unit phase rotation amount is a value obtained by dividing $2\pi$ by m, and m is an integer greater than or equal to 2.

In a possible implementation, m is an integer greater than or equal to 2 and less than or equal to a first threshold. Optionally, the first threshold is $2^n$, and n is a modulation order.

In a possible implementation, a value of the quantity of unit phase rotation amounts is from 0 to m-1.

In a possible implementation, the first key is represented by a first diagonal unitary matrix, a modulus of each diagonal element in the first diagonal unitary matrix is 1, and a value of a diagonal element in the first diagonal unitary matrix is the phase rotation amount between the first constellation point and the second constellation point.

Optionally, the transceiver module 1502 may include a receiving module and a sending module (not shown in FIG. 15). The transceiver module is configured to implement a sending function and a receiving function of the communication apparatus 1500.

Optionally, the communication apparatus 1500 may further include a storage module (not shown in FIG. 15). The storage module stores a program or instructions. When the processing module 1501 executes the program or the instructions, the communication apparatus 1500 is enabled to perform a function of the first communication apparatus in the communication method shown in FIG. 5.

It should be understood that the processing module 1501 in the communication apparatus 1500 may be implemented by a processor or a processor-related circuit component, and may be a processor or a processing unit. The transceiver module 1502 may be implemented by a transceiver or a transceiver-related circuit component, and may be a transceiver or a transceiver unit.

It should be noted that the communication apparatus 1500 may be a terminal device or a network device, may be a chip (system) or another part or component that may be disposed in the terminal device or the network device, or may be an apparatus that includes the terminal device or the network device. This is not limited in this application.

In addition, for technical effects of the communication apparatus 1500, refer to the technical effects of the communication method shown in FIG. 5. Details are not described herein again.

In some other embodiments, the communication apparatus 1500 is applicable to the communication system shown in FIG. 3, and performs a function of the second communication apparatus in the communication method shown in FIG. 5.

The processing module 1501 is configured to determine a third constellation diagram based on a signal received by the transceiver module 1502. The processing module 1201 is further configured to: determine a fourth constellation diagram based on the third constellation diagram; and demodulate the signal based on the fourth constellation diagram. The fourth constellation diagram includes fourth constellation points, the fourth constellation point is obtained by decrypting a third constellation point in the third constellation diagram based on a second key, and a phase of the third constellation point is different from a phase of the fourth constellation point.

In a possible implementation, the second key represents a phase rotation amount between the third constellation point and the fourth constellation point.

In a possible implementation, the phase rotation amount between the third constellation point and the fourth constellation point is determined based on a legitimate channel, and the legitimate channel is used to carry the signal.

In a possible implementation, information about the legitimate channel includes channel gains in a channel gain matrix of the legitimate channel.

In a possible implementation, a phase rotation amount of any constellation point in third constellation points is determined based on an initial phase rotation amount, a unit phase rotation amount, and a quantity of unit phase rotation amounts, and the quantity of unit phase rotation amounts is determined based on the channel gain.

In a possible implementation, an expression of the phase rotation amount of the any constellation point in the third constellation points is $e^{-j(\theta_0 + \Delta\theta \times \eta)}$.

In a possible implementation, the unit phase rotation amount is a value obtained by dividing $2\pi$ by m, and m is an integer greater than or equal to 2.

In a possible implementation, m is an integer greater than or equal to 2 and less than or equal to a first threshold. Optionally, the first threshold is $2^n$, and n is a modulation order.

In a possible implementation, a value of the quantity of unit phase rotation amounts is from 0 to m-1.

In a possible implementation, the second key is represented by a second diagonal unitary matrix, a modulus of each diagonal element in the second diagonal unitary matrix is 1, and a value of a diagonal element in the second diagonal unitary matrix is the phase rotation amount between the third constellation point and the fourth constellation point.

Optionally, the communication apparatus 1500 may further include a storage module (not shown in FIG. 15). The storage module stores a program or instructions. When the processing module 1501 executes the program or the instructions, the communication apparatus 1200 is enabled to perform a function of the second communication apparatus in the communication method shown in FIG. 4.

It should be understood that the processing module 1501 in the communication apparatus 1500 may be implemented by a processor or a processor-related circuit component, and may be a processor or a processing unit. The transceiver module 1502 may be implemented by a transceiver or a transceiver-related circuit component, and may be a transceiver or a transceiver unit.

It should be noted that the communication apparatus 1500 may be the terminal device or the network device shown in FIG. 15, or may be a chip (system) or another part or component disposed in the terminal device or the network device, or an apparatus that includes the terminal device or the network device. This is not limited in this embodiment of this application.

In addition, for technical effects of the communication apparatus 1500, separately refer to technical effects of the communication method shown in FIG. 5. Details are not described herein again.

For example, FIG. 16 is a second diagram of a structure of a communication apparatus according to an embodiment of this application. The communication apparatus may be a terminal device or a network device, or may be a chip (system) or another part or component that may be disposed in the terminal device or the network device. As shown in FIG. 16, the communication apparatus 1600 may include a processor 1601. Optionally, the communication apparatus 1600 may further include a memory 1602 and/or a transceiver 1603. The processor 1601 is coupled to the memory 1602 and the transceiver 1603, for example, may be connected through a communication bus; or the processor 1601 is integrated with the memory 1602, and is coupled to the transceiver. This is not limited in this embodiment of this application.

The following describes components of the communication apparatus 1600 in detail with reference to FIG. 16.

The processor 1601 is a control center of the communication apparatus 1600, and may be one processor, or may be a collective term of a plurality of processing elements. For example, the processor 1601 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1601 may perform various functions of the communication apparatus 1600 by running or executing a software program stored in the memory 1602 and invoking data stored in the memory 1602.

Optionally, the processor 1601 may perform one or more functions of the communication apparatus 1600 by using a logic circuit of the processor 1601.

During specific implementation, in an embodiment, the processor 1601 may include one or more CPUs, for example, a CPU 0 and a CPU 1 shown in FIG. 16.

During specific implementation, in an embodiment, the communication apparatus 1600 may alternatively include a plurality of processors, for example, the processor 1601 and a processor 1604 shown in FIG. 16. Each of the processors may be a single-core processor (single-CPU), or may be a multi-core processor (multi-CPU). The processor herein may be one or more devices, circuits, and/or processing cores configured to process data (for example, computer program instructions).

The memory 1602 is configured to store the software program for performing the solutions of this application, and the processor 1601 controls the execution. For a specific implementation, refer to the foregoing method embodiment. Details are not described herein again.

Optionally, the memory 1602 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or data structure and that can be accessed by a computer. However, this is not limited thereto. The memory 1602 may be integrated with the processor 1601, or may exist independently, and is coupled to the processor 1601 through an interface circuit (not shown in FIG. 16) of the communication apparatus 1600.

This is not specifically limited in this embodiment of this application.

The transceiver 1603 is configured to communicate with another communication apparatus. For example, the communication apparatus 1600 is a terminal device, and the transceiver 1603 may be configured to communicate with a network device or communicate with another terminal device. For another example, the communication apparatus 1600 is a network device, and the transceiver 1603 may be configured to communicate with a terminal device or communicate with another network device.

Optionally, the transceiver 1603 may include a receiver and a transmitter (not separately shown in FIG. 16). The receiver is configured to implement a receiving function, and the transmitter is configured to implement a sending function.

Optionally, the transceiver 1603 may be integrated with the processor 1601, or may exist independently, and is coupled to the processor 1601 through an interface circuit (not shown in FIG. 16) of the communication apparatus 1600. This is not specifically limited in this embodiment of this application.

It should be noted that the structure of the communication apparatus 1600 shown in FIG. 16 does not constitute a limitation on the communication apparatus. An actual communication apparatus may include more or fewer components than those shown in the figure, or some components may be combined, or different component deployment may be used.

In addition, for technical effects of the communication apparatus 1600, refer to technical effects of the communication method in the foregoing method embodiment. Details are not described herein again.

It should be understood that the processor in this embodiment of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitative descriptions, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When the software is used for the implementation, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a communication chip. The communication chip stores instructions. When the communication chip runs on a communication device, the method provided in embodiments of this application is implemented.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification generally represents an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one item (piece) of a, b, or c may represent: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   obtaining a first constellation diagram, wherein the first constellation diagram comprises first constellation points, the first constellation point is obtained by encrypting a second constellation point in a second constellation diagram based on a first key, the second constellation point is obtained by mapping to-be-sent data, and a phase of the first constellation point is different from a phase of the second constellation point; and
   sending a signal based on the first constellation diagram.

2. The method according to claim 1, wherein the first key represents a phase rotation amount between the first constellation point and the second constellation point.

3. The method according to claim 2, wherein the phase rotation amount is determined based on information about a legitimate channel, and the legitimate channel is used to carry the signal.

4. The method according to claim 3, wherein the information about the legitimate channel comprises channel gains in a channel gain matrix of the legitimate channel.

5. The method according to claim 4, wherein a phase rotation amount of any constellation point in second constellation points is determined based on an initial phase rotation amount, a unit phase rotation amount, and a quantity of unit phase rotation amounts, and the quantity of unit phase rotation amounts is determined based on the channel gain.

6. The method according to claim 5, wherein an expression of the phase rotation amount of the any constellation point in the second constellation points is: $e^{j(\theta_0 + \Delta\theta \times \eta)}$, wherein $\theta_0$ is the initial phase rotation amount, $\Delta\theta$ is the unit phase rotation amount, and $\eta$ is the quantity of unit phase rotation amounts.

7. The method according to claim 5 or 6, wherein the unit phase rotation amount is a value obtained by dividing $2\pi$ by m, and m is an integer greater than or equal to 2 and less than or equal to a first threshold.

8. The method according to claim 7, wherein a value of the quantity of unit phase rotation amounts is greater than or equal to 0 and less than or equal to m-1.

9. The method according to any one of claims 1 to 8, wherein the first key is represented by a first diagonal unitary matrix, a modulus of each diagonal element in the first diagonal unitary matrix is 1, and a value of a diagonal element in the first diagonal unitary matrix is the phase rotation amount between the first constellation point and the second constellation point.

10. A communication method, wherein the method comprises:

determining a third constellation diagram based on a received signal;
determining a fourth constellation diagram based on the third constellation diagram, wherein the fourth constellation diagram comprises fourth constellation points, the fourth constellation point is obtained by decrypting a third constellation point in the third constellation diagram based on a second key, and a phase of the third constellation point is different from a phase of the fourth constellation point; and
demodulating the signal based on the fourth constellation diagram.

11. The method according to claim 10, wherein the second key represents a phase rotation amount between the third constellation point and the fourth constellation point.

12. The method according to claim 11, wherein the phase rotation amount is determined based on a legitimate channel, and the legitimate channel is used to carry the signal.

13. The method according to claim 12, wherein information about the legitimate channel comprises channel gains in a channel gain matrix of the legitimate channel.

14. The method according to claim 13, wherein a phase rotation amount of any constellation point in third constellation points is determined based on an initial phase rotation amount, a unit phase rotation amount, and a quantity of unit phase rotation amounts, and the quantity of unit phase rotation amounts is determined based on the channel gain.

15. The method according to claim 14, wherein an expression of the phase rotation amount of the any constellation point in the third constellation points is: $e^{j(\theta_0 + \Delta\theta \times \eta)}$, wherein $\theta_0$ is the initial phase rotation amount, $\Delta\theta$ is the unit phase rotation amount, and $\eta$ is the quantity of unit phase rotation amounts.

16. The method according to claim 14 or 15, wherein the unit phase rotation amount is a value obtained by dividing $2\pi$ by m, and m is an integer greater than or equal to 2 and less than or equal to a first threshold.

17. The method according to claim 16, wherein a value of the quantity of unit phase rotation amounts is greater than or equal to 0 and less than or equal to m-1.

18. The method according to any one of claims 10 to 17, wherein the second key is represented by a second diagonal unitary matrix, a modulus of each diagonal element in the second diagonal unitary matrix is 1, and a value of a diagonal element in the second diagonal unitary matrix is the phase rotation amount between the third constellation point and the fourth constellation point.

**19.** A communication method, wherein the method comprises:

obtaining, by a first communication apparatus, a first constellation diagram, wherein the first constellation diagram comprises first constellation points, the first constellation point is obtained by encrypting a second constellation point in a second constellation diagram based on a first key, the second constellation point is obtained by mapping to-be-sent data, and a phase of the first constellation point is different from a phase of the second constellation point;

sending, by the first communication apparatus, a first signal based on the first constellation diagram;

receiving, by a second apparatus, a second signal corresponding to the first signal;

determining, by the second communication apparatus, a third constellation diagram based on the second signal;

determining, by the second communication apparatus, a fourth constellation diagram based on the third constellation diagram, wherein the fourth constellation diagram comprises fourth constellation points, the fourth constellation point is obtained by decrypting a third constellation point in the third constellation diagram based on a second key, and a phase of the third constellation point is different from a phase of the fourth constellation point; and

demodulating, by the second communication apparatus, the second signal based on the fourth constellation diagram.

**20.** A communication apparatus, wherein the apparatus comprises:

a processing module, configured to obtain a first constellation diagram, wherein the first constellation diagram comprises first constellation points, the first constellation point is obtained by encrypting a second constellation point in a second constellation diagram based on a first key, the second constellation point is obtained by mapping to-be-sent data, and a phase of the first constellation point is different from a phase of the second constellation point; and

a transceiver module, configured to send a signal based on the first constellation diagram.

**21.** The apparatus according to claim 20, wherein the first key represents a phase rotation amount between the first constellation point and the second constellation point.

**22.** The apparatus according to claim 21, wherein the phase rotation amount is determined based on information about a legitimate channel, and the legitimate channel is used to carry the signal.

**23.** The apparatus according to claim 22, wherein the information about the legitimate channel comprises channel gains in a channel gain matrix of the legitimate channel.

**24.** The apparatus according to claim 23, wherein a phase rotation amount of any constellation point in second constellation points is determined based on an initial phase rotation amount, a unit phase rotation amount, and a quantity of unit phase rotation amounts, and the quantity of unit phase rotation amounts is determined based on the channel gain.

**25.** The apparatus according to claim 24, wherein an expression of the phase rotation amount of the any constellation point in the second constellation points is: $e^{j(\theta_0 + \Delta\theta \times \eta)}$, wherein $\theta_0$ is the initial phase rotation amount, $\Delta\theta$ is the unit phase rotation amount, and $\eta$ is the quantity of unit phase rotation amounts.

**26.** The apparatus according to claim 24 or 25, wherein the unit phase rotation amount is a value obtained by dividing $2\pi$ by m, and m is an integer greater than or equal to 2 and less than or equal to a first threshold.

**27.** The apparatus according to claim 26, wherein a value of the quantity of unit phase rotation amounts is greater than or equal to 0 and less than or equal to m-1.

**28.** The apparatus according to any one of claims 20 to 27, wherein the first key is represented by a first diagonal unitary matrix, a modulus of each diagonal element in the first diagonal unitary matrix is 1, and a value of a diagonal element in the first diagonal unitary matrix is the phase rotation amount between the first constellation point and the second constellation point.

**29.** A communication apparatus, wherein the apparatus comprises:

a processing module, configured to determine a third constellation diagram based on a signal received by a transceiver module, wherein

the processing module is further configured to determine a fourth constellation diagram based on the third constellation diagram, wherein the fourth constellation diagram comprises fourth constellation points, the fourth constellation point is obtained by decrypting a third constellation point in the third constellation diagram based on a second key, and a phase of the third constellation point is different from a phase of the fourth constellation point; and

the processing module is further configured to demodulate the signal based on the fourth constellation diagram.

30. The apparatus according to claim 29, wherein the second key represents a phase rotation amount between the third constellation point and the fourth constellation point.

31. The apparatus according to claim 30, wherein the phase rotation amount is determined based on a legitimate channel, and the legitimate channel is used to carry the signal.

32. The apparatus according to claim 31, wherein information about the legitimate channel comprises channel gains in a channel gain matrix of the legitimate channel.

33. The apparatus according to claim 32, wherein a phase rotation amount of any constellation point in third constellation points is determined based on an initial phase rotation amount, a unit phase rotation amount, and a quantity of unit phase rotation amounts, and the quantity of unit phase rotation amounts is determined based on the channel gain.

34. The apparatus according to claim 33, wherein an expression of the phase rotation amount of the any constellation point in the third constellation points is: $e^{-j(\theta_0 + \Delta\theta \times \eta)}$, wherein $\theta_0$ is the initial phase rotation amount, $\Delta\theta$ is the unit phase rotation amount, and $\eta$ is the quantity of unit phase rotation amounts.

35. The apparatus according to claim 33 or 34, wherein the unit phase rotation amount is a value obtained by dividing $2\pi$ by m, and m is an integer greater than or equal to 2 and less than or equal to a first threshold.

36. The apparatus according to claim 35, wherein a value of the quantity of unit phase rotation amounts is greater than or equal to 0 and less than or equal to m-1.

37. The apparatus according to any one of claims 29 to 36, wherein the second key is represented by a second diagonal unitary matrix, a modulus of each diagonal element in the second diagonal unitary matrix is 1, and a value of a diagonal element in the second diagonal unitary matrix is the phase rotation amount between the third constellation point and the fourth constellation point.

38. A communication apparatus, wherein the communication apparatus comprises a processor; and the processor is configured to enable, by using a logic circuit and/or by executing computer instructions, the communication apparatus to perform the method according to any one of claims 1 to 9, or perform the method according to any one of claims 10 to 18.

39. The apparatus according to claim 38, comprising a memory, wherein the memory is configured to store the computer instructions.

40. A communication chip, wherein the communication chip stores instructions; and when the chip runs on a communication device, the method according to any one of claims 1 to 9 or the method according to any one of claims 10 to 18 is implemented.

41. A communication system, wherein the communication system comprises a first communication apparatus configured to perform the method according to any one of claims 1 to 9, and/or a second communication apparatus configured to perform the method according to any one of claims 10 to 18.

42. A computer-readable storage medium, wherein the computer-readable storage medium comprises a computer program or instructions; and when the computer program or the instructions are run on a computer, the computer is enabled to perform the method according to any one of claims 1 to 9, perform the method according to any one of claims 10 to 18, or perform the apparatus according to claim 19.

**43.** A computer program product, wherein the computer program product comprises a computer program or instructions; and when the computer program or the instructions are run by a communication apparatus, the method according to any one of claims 1 to 9 is performed, the method according to any one of claims 10 to 18 is performed, or the apparatus according to claim 19 is performed.

FIG. 1

FIG. 2

FIG. 3

FIG. 4

FIG. 5

Q axis

Constellation
point 2

Constellation
point 1

I axis

FIG. 6

Q axis

Location 1

Constellation
point 2

Constellation
point 1

I axis

Location 2

FIG. 7

FIG. 8

FIG. 9

FIG. 10

FIG. 11

(0, 0, 2)

| First communication apparatus |

(10, 0, 2)

| Second communication apparatus |

| Eavesdropper |

(10, 5, 2.1)

**FIG. 12**

Bit error rate

Eavesdropper

Second communication apparatus

Signal-to-noise ratio

**FIG. 13**

Sending: Message → Encoding → Bit-to-symbol mapping → First security module → MIMO → Legitimate channel

Receiving: ← Message ← Decoding ← Symbol-to-bit mapping ← Second security module ← MIMO

**FIG. 14**

Communication apparatus 1500

Processing module ◄──► Transceiver module

1501

1502

FIG. 15

Communication apparatus 1600

Processor 1601

CPU 0

CPU 1

Processor 1604

CPU 0

CPU 1

Memory 1602

1603

Transceiver

FIG. 16

## INTERNATIONAL SEARCH REPORT

| International application No. |
| --- |
| **PCT/CN2023/106437** |

### A. CLASSIFICATION OF SUBJECT MATTER

H04W12/03(2021.01)i;  H04L9/00(2022.01)i

According to International Patent Classification (IPC) or to both national classification and IPC

### B. FIELDS SEARCHED

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC, ETSI, IETF: 加密, 解调, 解密, 密钥, 相位, 相位旋转, 星座点, 星座图, 旋转, constellation, key, phase, planisphere, decrypt+, encrypt+, rotat+

### C. DOCUMENTS CONSIDERED TO BE RELEVANT

| Category* | Citation of document, with indication, where appropriate, of the relevant passages | Relevant to claim No. |
| --- | --- | --- |
| X | CN 106789049 A (NATIONAL UNIVERSITY OF DEFENSE TECHNOLOGY OF PLA) 31 May 2017 (2017-05-31)<br>description, paragraphs 62-112, and figures 1-13 | 1-43 |
| X | CN 108574574 A (NATIONAL UNIVERSITY OF DEFENSE TECHNOLOGY OF PLA) 25 September 2018 (2018-09-25)<br>description, paragraphs 2-59, and figures 1-5 | 1-43 |
| X | CN 116032454 A (SOUTHEAST UNIVERSITY) 28 April 2023 (2023-04-28)<br>description, paragraphs 49-100, and figures 1-5 | 1-43 |
| X | CN 111683033 A (CHONGQING UNIVERSITY OF POSTS AND TELECOMMUNICATIONS) 18 September 2020 (2020-09-18)<br>description, paragraphs 34-98, and figures 1-4 | 1-43 |
| X | CN 105916139 A (XI'AN JIAOTONG UNIVERSITY) 31 August 2016 (2016-08-31)<br>description, paragraphs 48-89, and figures 1-3 | 1-43 |
| A | US 2017150348 A1 (RAYTHEON COMPANY) 25 May 2017 (2017-05-25)<br>entire document | 1-43 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 November 2023** | **04 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/106437**

| Patent document cited in search report | | | Publication date (day/month/year) | Patent family member(s) | Publication date (day/month/year) |
|---|---|---|---|---|---|
| CN | 106789049 | A | 31 May 2017 | None | |
| CN | 108574574 | A | 25 September 2018 | None | |
| CN | 116032454 | A | 28 April 2023 | None | |
| CN | 111683033 | A | 18 September 2020 | None | |
| CN | 105916139 | A | 31 August 2016 | None | |
| US | 2017150348 | A1 | 25 May 2017 | None | |

Form PCT/ISA/210 (patent family annex) (July 2022)